## Europäisches Patentamt

## European Patent Office

## Office européen des brevets

(19)

(11) Veröffentlichungsnummer: **0 176 673**
**B1**

(12) **EUROPÄISCHE PATENTSCHRIFT**

(45) Veröffentlichungstag der Patentschrift:
01.03.89

(21) Anmeldenummer: 85108531.6

(22) Anmeldetag: 09.07.85

(51) Int. Cl.⁴: **C 08 G 6/02, C 08 G 8/26,**
**C 08 G 12/00, C 08 G 16/00,**
**B 01 F 17/52 // C04B24/30,**
**C09K7/02**

(54) Metallverbindungen von Säuregruppen enthaltenden Kondensationsprodukten oder Co-Kondensationsprodukten von Ketonen und Aldehyden.

(30) Priorität: 07.08.84 DE 3429068

(43) Veröffentlichungstag der Anmeldung:
09.04.86 Patentblatt 86/15

(45) Bekanntmachung des Hinweises auf die Patenterteilung:
01.03.89 Patentblatt 89/9

(84) Benannte Vertragsstaaten:
AT BE CH DE FR GB IT LI NL SE

(66) Entgegenhaltungen:
EP-A- 0 078 938
DE-A- 1 583 015
DE-A- 2 341 923
DE-B- 2 138 407
DE-C- 637 732
GB-A- 595 366
US-A- 2 321 451
US-A- 4 026 867

(73) Patentinhaber: SKW Trostberg Aktiengesellschaft,
Dr.-Albert-Frank-Strasse 32 Postfach 1150/1160,
D-8223 Trostberg (DE)

(72) Erfinder: Plank, Johann, Dr., Peter-Müllritter-Strasse 8,
D-8223 Trostberg (DE)
Erfinder: Aignesberger, Alois, Dr.,
Pienzenauerstrasse 16, D-8223 Trostberg (DE)

(74) Vertreter: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Metallverbindungen von Säuregruppen enthaltenden Kondensationsprodukten oder Co-Kondensationsprodukten von Ketonen und Aldehyden.

Die basenkatalysierte Kondensation von Ketonen mit Aldehyden ist seit langem bekannt. Sie führt in ihrer Endstufe zu wasserunlöslichen Harzen (vgl. z.B. J. Scheiber, «Chemie und Technologie der künstlichen Harze», Band 1, Stuttgart 1961, Seite 164 ff).

Die Einführung von Säuregruppen in das Keton-Aldehyd-Harz ermöglicht die Bildung wasserlöslicher Kondensationsprodukte. So sind z.B. aus der DE-AS 2 341 923 gut wasserlösliche Kondensationsprodukte aus Cycloalkanonen, Formaldehyd und Sulfit bekannt, welche sich z.B. als Zusätze für anorganische Bindemittel zur Verbesserung ihrer Eigenschaften eignen. Andere, für den gleichen Zweck bekannte Zusätze sind Kondensationsprodukte aus Formaldehyd, Säuregruppen einführender Verbindung und Aminoplastbildnern, wie z.B. Harnstoff oder Melamin (vgl. DE-PS 1 671 058 und DE-PS 2 359 291).

Diese bekannten Kondensationsprodukte weisen jedoch einige Nachteile auf: ein Nachteil der wasserlöslichen Cycloalkanon-Aldehyd-Kondensationsprodukte ist insbesondere deren sehr geringe thermische Stabilität; so entstehen z.B. beim Einengen einer Lösung der Cycloalkanon-Formaldehyd-Kondensationsprodukte selbst unter schonenden Bedingungen (ca. 50 °C) bereits weitgehend wasserunlösliche pulverförmige Verbindungen; Melaminharze sind aufgrund des relativ teuren Ausgangsstoffes Melamin für eine Massenanwendung nur bedingt geeignet; Harnstoffharze besitzen eine geringe Lagerstabilität.

Ligninsulfonatharze (Lignosulfonate) sind makromolekulare Verbindungen, welche der Gruppe der anionischen Polyelektrolyte zuzurechnen sind. Sie fallen bei der Papierherstellung aus Holz, z.B. nach dem Sulfitverfahren als Abfallprodukt (sog. «Schwarzlauge») mit häufig wechselnder Zusammensetzung und zahlreichen Verunreinigungen an. Als kostengünstige Zusatzstoffe haben die Lignosulfonate beispielsweise in der Textil-, Gerb- und Bauhilfsmittelindustrie sowie bei der Erdölgewinnung als Dispergiermittel und/oder Retentionsmittel Anwendung gefunden. Sie sind in ihrer Qualität jedoch uneinheitlich und zeigen unerwünschte Nebeneffekte, wie z.B. eine Abbindeverzögerung.

Die Wirkung dieser Lignosulfonate ist deshalb sehr begrenzt und insbesondere auch uneinheitlich, weshalb zahlreiche Verfahren zur Qualitätsverbesserung der Sulfitablaugen entwickelt wurden. So beschreibt das US-Patent 2 935 504 die Verbesserung von ligninhaltiger Sulfitablauge durch (1) Fraktionieren des rohen Lignins, (2) Oxidation, (3) Behandlung mit Eisen-, Aluminium-, Chrom- oder Kupfersalzen und (4) durch kombinierte Anwendung der Oxidation und Metallsalz-Behandlung. US-Patent 3 544 460 beschreibt die Verbesserung von sulfoniertem Lignin durch Oxidation bei mindestens 200 °C, vorzugsweise 230 bis 270 °C, und US-Patent 4 219 471 einen Mehrstufenprozess zur Herstellung eines geeigneten Lignosulfonat-Produkts durch alkalische Oxidation, Hydrolyse, teilweise Desulfonierung, anschliessende Resulfonierung und weitere Umsetzung mit Halogencarbonsäuren, und US-Patent 4 220 585 schliesslich ein Verfahren zur Herstellung von Zusatzmitteln mit verbesserten Dispergiereigenschaften aus Lignosulfonaten und Titan- oder Zirkoniumsalzen und/oder Mischungen dieser Metallsalze mit Eisensalzen.

Aus der DE-AS 2 916 705 ist die Herstellung eines Harzproduktes durch Co-Kondensation eines sulfitmodifizierten Melaminharzes mit Ligninsulfonat-Harnstoff-Formaldehyd-Harzen bekannt. Auf diese Weise wird zwar das im Zusammenhang mit Melaminharzen auftretende Problem des teuren Ausgangsstoffes Melamin durch teilweise Substitution mit Ligninsulfonat-Harnstoff gelöst; die Darstellung dieser Harze erfordert jedoch ein sehr arbeitsintensives mehrstufiges Verfahren, wodurch die Herstellungskosten sehr hoch und unwirtschaftlich werden.

Die DE-OS 3 144 673 beschreibt Kondensationsprodukte, die durch Umsetzung von Ketonen, Aldehyden und Säuregruppen einführenden Verbindungen hergestellt werden; Gegenstand der deutschen Patentanmeldung P 3 315 152 sind Co-Kondensationsprodukte, die durch Co-Kondensation von Ketonen und Aldehyden mit Säuregruppen einführenden Verbindungen und mit Aminoplastbildnern und/oder aromatischen Verbindungen und/oder deren Kondensationsprodukten und/oder mit Ligninsulfonatharzen und/oder mit Cellulosederivaten erhältlich sind. Diese Kondensations- und Co-Kondensationsprodukte sind wie die Lignosulfonate der Gruppe der anionischen Polyelektrolyte zuzurechnen und lassen sich durch geeignete Auswahl der Keton-, Aldehyd- bzw. der Co-Kondensationskomponente, der Molverhältnisse und Umsetzungsbedingungen mit Eigenschaften als Verdickungsmittel, Retentionsmittel, oberflächenaktives Mittel, Dispergiermittel und/oder Verflüssigungsmittel erhalten, welche durch gute Wasserlöslichkeit und Thermostabilität gekennzeichnet sind.

Die beschriebenen Produkte auf der Basis von Lignosulfonaten oder Keton-Aldehyd-Kondensationsprodukten weisen jedoch Mängel auf. So ist dem Fachmann bekannt, dass unbehandelte Lignosulfonate als Dispergiermittel nur eine begrenzte Wirkung entfalten und dadurch entweder sehr hohe Dosierungen erfordern oder aber gute Effekte überhaupt nicht zu erreichen sind. Die Behandlung und chemische Modifizierung der Lignosulfonate führt zwar zu Produkten mit im allgemeinen verbesserter Wirksamkeit und insbesondere auch Einheitlichkeit, sie ist jedoch mit sehr hohem Aufwand verbunden, da sie z.T. aus sehr umständlichen Mehrstufenprozessen, aus energieintensiven und technisch schwierigen Verfahren, wie z.B. der Oxidation bei Temperaturen über 200 °C oder auch aus Umsetzungen mit teuren Ausgangsstoffen, wie z.B. mit den Titan-oder Zirkoniumsalzen, besteht. Darüber hinaus ist allen Produkten auf der Basis von Lignosulfonat gemeinsam, dass sie durch ihren Herstellungsprozess bedingt zahlreiche Verunreinigungen und Nebenprodukte, beispielsweise Zuckerverbindungen, enthalten, welche bei der Anwendung ihre Wirkung beeinträchtigen oder zu gänzlich unerwünschten Nebeneffekten führen und damit ihren Einsatz beschränken. Aus der Literatur ist auch bekannt, dass die besonders temperaturstabilen Eisenchrom-Lignosulfonate z. B. bei der Anwendung als Dispergiermittel für Bohrspülungen bereits ab 120°C ein Nachlassen ihrer Thinner-Wirkung zeigen und damit für Anwendungen mit längerdauernder Temperaturbelastung von über 150°C nicht geeignet sind (vgl. Kelly, J., Jr., «How Lignosulfonates Behave at High Temperatures», Oil Gas Journal, 5. Okt. 1964, S. 112–119). Die Kondensations- und Co-Kondensationsprodukte auf der Basis von Ketonen und Aldehyden schliesslich besitzen den Nachteil, dass sie bei einigen Anwendungen, wie z. B. der Dispergierung oder Verdickung von wässrigen Systemen zwar eine in der Regel gute, jedoch nicht immer optimale Wirkung besitzen und daher nicht in der gewünschten Breite Anwendung finden können.

Es besteht daher weiterhin ein Bedürfnis nach Zusatzmitteln mit Verdickungs-, Retentions-, Emulgier-, Dispergier- und/oder Verflüssigungswirkung sowie Oberflächenaktivität, die die genannten Nachteile bzw. Mängel nicht aufweisen.

Aufgabe der vorliegenden Erfindung war es deshalb, Zusatzmittel mit verbesserter Wirkung als Verdickungs-, Retentions-, Emulgier-, Dispergier-, Verflüssigungsmittel und/oder oberflächenaktives Mittel bereitzustellen. Diese Aufgabe wird mit dem Gegenstand der vorliegenden Anmeldung gelöst.

Gegenstand der Erfindung sind Metallverbindungen von Säuregruppen enthaltenden Kondensationsprodukten oder Co-Kondensationsprodukten von Ketonen und Aldehyden, erhältlich durch Umsetzung von Säuregruppen enthaltende Keton-Aldehyd-Kondensationsprodukten und/oder Co-Kondensationsprodukten mit ein- oder mehrwertigen Metallverbidungen und/oder Metallkomplexverbindungen.

Die erfindungsgemässen Metallverbindungen von säuregruppenhaltigen Kondensations- und/oder Co-Kondensationsprodukten von Ketonen und Aldehyden besitzen neben einer hohen thermischen Stabilität überraschenderweise auch eine gegenüber den Kondensations- oder Co-Kondensationsprodukten auf der Basis von Ketonen und Aldehyden wesentliche Verbesserung ihrer Eigenschaften; sie stellen deshalb wertvolle, allgemein und auf breiter Basis anwendbare Zusatzmittel dar, die aufgrund ihrer Ausgangsprodukte und des einfach und wirtschaftlich durchführbaren Verfahrens auch für eine Massenanwendung geeignet sind.

Als Säuregruppen enthaltende Kondensationsprodukte von Ketonen und Aldehyden können z. B. die aus der DE-OS 3 144 673 bekannten Kondensationsprodukte eingesetzt werden, als Co-Kondensationsprodukte die in der deutschen Patentanmeldung P 3 315 152 beschriebenen Harze.

Erfindungsgemäss eingesetzte Kondensationsprodukte und Co-Kondensationsprodukte aus Ketonen und Aldehyden haben vorzugsweise folgenden Aufbau:

Der Rest R der Aldehyde R–CHO kann Wasserstoff, ein aromatischer oder nichtaromatischer (cyclischer oder acyclischer) carbo- oder heterocyclischer Rest oder auch araliphatischer Rest sein, in dem die Zahl der Kohlenstoffatome oder Kohlenstoff- und Heteroatome vorzugsweise 1 bis 10 ist. Aromatische Reste sind z. B. $\alpha$- oder $\beta$-Naphthyl, Phenyl oder Furfuryl, araliphatische Reste z. B. Benzyl oder Phenäthyl, nichtaromatische Reste z. B. Cycloalkyl- und insbesondere Alkylreste, vorzugsweise mit 1 bis 6 Kohlenstoffatomen, wie z. B. Methyl, Äthyl, Propyl, Butyl. Die aliphatischen Reste können auch verzweigt oder ungesättigt sein, und sind dann z. B. Vinyl.

Die Aldehyde können auch durch einen oder mehrere Substituenten, die die Kondensationsreaktion nicht beeinträchtigen, substituiert sein, wie z. B. durch Amino-, Hydroxy-, Alkoxy- oder Alkoxycarbonylgruppen, und/oder auch durch die in den Kondensationsprodukten enthaltenen Säuregruppen. Es können auch Aldehyde mit mehr als einer Aldehydgruppe, z. B. Di- oder Trialdehyde, eingesetzt werden, die infolge ihrer erhöhten Reaktivität in einigen Fällen besonders zweckmässig sein können. Es können auch, z. B. bei den niedrigen gesättigten Aldehyden wie Formaldehyd oder Acetaldehyd, die polymeren Formen (z. B. Paraformaldehyd oder Paraldehyd) eingesetzt werden.

Beispiele für gesättigte aliphatische Aldehyde sind Formaldehyd (oder Paraformaldehyd), Acetaldehyd (oder Paraldehyd), Butyraldehyd; für substituierte gesättigte aliphatische Aldehyde 3-Methoxy-propionaldehyd, Acetaldol; für ungesättigte aliphatische Aldehyde Acrolein, Crotonaldehyd, Furfurol, 4-Methoxy-furfurol, Propargylaldehyd; für Dialdehyde Glyoxal, Glutardialdehyd. Besonders bevorzugt wird als Aldehyd Formaldehyd verwendet.

Erfindungsgemäss für die Kondensationsprodukte eingesetzte Ketone sind symmetrische oder unsymmetrische Ketone mit vorzugsweise acyclischen aliphatischen, araliphatischen und/oder aromatischen Kohlenwasserstofresten, wobei aber mindestens ein Rest ein nichtaromatischer Rest ist, und/oder Cycloalkanone. Vorzugsweise besitzen die Kohlenwasserstoffreste 1 bis 10 Kohlenstoffatome.

Acyclische aliphatische Reste sind geradkettige oder verzweigte, ungesättigte und vorzugsweise gesättigte Alkylreste, wie z. B. Methyl, Äthyl, Propyl, Butyl, Isobutyl, Nonyl. Araliphatische Reste sind z. B. Benzyl oder Phenäthyl, und aromatische Reste sind z. B. $\alpha$- oder $\beta$-Naphthyl und insbesondere Phenyl. Cycloalkanone leiten sich insbesondere von Cyclopentan und Cyclohexan bzw. deren methyl-substituierten Derivaten ab.

Die Ketone können auch durch einen oder mehrere Substituenten, die die Kondensationsreaktion nicht beeinträchtigen, substituiert sein, wie z.B. durch Amino-, Hydroxy-, Alkoxy- oder Alkoxycarbonylgruppen, und/oder auch durch die in den Kondensationsprodukten enthaltenen Säuregruppen.

Beispiele für gesättigte acyclische Ketone sind Aceton, Methyl-äthyl-keton, Methyl-iso-butyl-keton; für substituierte gesättigte acyclische Ketone Methoxyaceton, Diacetonalkohol, Acetessigsäureäthylester; für ungesättigte aliphatische Ketone Methyl-vinyl-keton, Mesityloxid, Phoron; für araliphatische Ketone Acetophenon, 4-Methoxyacetophenon, 4-Acetyl-benzolsulfonsäure; für Diketone Diacetyl, Acetylaceton, Benzoylaceton.

Die Aldehyde und Ketone sind in reiner Form, aber auch in Form von Additionsverbindungen mit dem die Säuregruppen einführenden Stoff, z.B. als Aldehydsulfitaddukt oder als Hydroxymethansulfinsäuresalz, einsetzbar. Es können auch zwei oder mehrere verschiedene Aldehyde und/oder Ketone eingesetzt werden.

Die Gesamtzahl der Kohlenstoffatome oder gegebenenfalls Kohlenstoffatome und Heteroatome in den erfindungsgemäss eingesetzten Aldehyden und Ketonen wird so gewählt, dass der hydrophile Charakter der Kondensationsprodukte erhalten bleibt. Sie ist deshalb auch abhängig von der Zahl der Säuregruppen im Kondensationsprodukt, aber auch vom Verhältnis Keton/Aldehyd und gegebenenfalls den übrigen Komponenten. Die bevorzugte Gesamtzahl beträgt für die Aldehyde 1 bis 11, für die Ketone 3 bis 12.

Das Molverhältnis von Ketonen/Aldehyden/Säuregruppen beträgt im allgemeinen 1/1 bis 18/0,02 bis 3, wobei aber je nach dem speziellen Verwendungszweck auch Abweichungen möglich sind.

Als erfindungsgemäss verwendbare Aminoplastbildner können alle für Aminoplaste, insbesondere zur Kondensation mit Formaldehyd üblichen Aminoplastbildner eingesetzt werden, also inbesondere Melamin und/oder Harnstoff, Guanamide, Dicyandiamid, aber auch z.B. Aminoessigsäure. Als aromatische Verbindungen können erfindungsgemäss alle zur Bildung von Phenolharzen geeigneten Phenole, also insbesondere Phenol, Kresole und Xylenole, verwendet werden, daneben aber auch reaktive substituierte und/oder mehrkernige Aromaten, wie z.B. Naphthalin und dessen Derivate. Anstelle der Aminoplastbildner oder Phenole können auch ganz oder teilweise deren Vorkondensate oder Kondensa-tionsprodukte verschiedenen Kondensationsgra-des, insbesondere deren Kondensationsprodukte mit Formaldehyd, verwendet werden, wie z.B. Novolacke. Ebenso einsetzbar sind Säuregruppen enthaltende Aminoplastbildner und aromatische Verbindungen, wie z.B. Naphthalinsulfon-säuren.

Erfindungsgemäss verwendete Ligninsulfonat-harze sind die bei der Behandlung von Holz mit Natriumsulfit (Sulfitverfahren) gebildeten Ligninsulfonate und/oder deren Umsetzungsprodukte mit Formaldehyd und/oder Sulfogruppen einführenden Verbindungen, wie z.B. Sulfiten, Pyrosulfiten oder Aldehyd-Bisulfit-Additionsverbindungen.

Cellulosederivate sind insbesondere Celluloseester, wie z.B. Celluloseacetat, und in erster Linie Celluloseether, wie z.B. Methylcellulose, Hydroxymethylcellulose, Hydroxyethylcellulose und Carboxymethylcellulose.

Der Anteil an Aminoplastbildnern und/oder aromatischen Verbindungen bzw. deren Kondensaten, an Ligninsulfonatharzen und/oder Cellulosederivaten richtet sich insbesondere nach der beabsichtigten Verwendung; er beträgt im allgemeinen 2 bis 50 Gew.-%, bezogen auf das fertige Kondensationsprodukt, wobei aber nach oben oder unten Abweichungen möglich sind.

Die Kondensationsprodukte können durch Umsetzung der Ketone, Aldehyde und Säuregruppen einführenden Verbindungen unter alkalischen pH-Wertbedingungen erhalten werden, wobei nach Art einer Eintopfreaktion vorgegangen werden kann. Als Ausführungsformen für die Herstellung der Kondensationsprodukte sind folgende Varianten möglich:

I. Vorlegen des Ketons und der Säuregruppen einführenden Verbindung und Zugabe des Aldehyds,

II. Vorlegen des Aldehyds und der Säuregruppen einführenden Verbindung und Zugabe des Ketons,

III. Vorlegen des Ketons und Zugabe eines Gemisches aus Aldehyd und Säuregruppen einführender Verbindung oder (z.B. im Falle von Sulfit) einer Verbindung des Aldehyds mit der Säuregruppen einführenden Verbindung,

IV. Vorlegen des Aldehyds und Zugabe eines Gemisches aus Keton und Säuregruppen einführender Verbindung oder einer Verbindung des Ketons mit der Säuregruppen einführenden Verbindung und

V. gleichzeitiges Vorlegen von Aldehyd, Keton und Säuregruppen einführender Verbindung.

Im allgemeinen ist die Verfahrensvariante I. bevorzugt; die Verfahrensvariante V. eignet sich insbesondere zur Umsetzung weniger reaktiver Komponenten.

Die Reaktion springt im allgemeinen bereits bei gelindem Erhitzen an und verläuft dann exotherm, so dass in der Regel gekühlt wird. Zur Erzielung eines gleichmässigen Produkts oder insbesondere beim Einsatz von weniger reaktionsfähigen Ausgangsprodukten ist eine Nacherhitzung zweckmässig, die bis zu mehreren Stunden dauern kann.

Die Umsetzung wird im allgemeinen bei einem pH-Wert von 7 bis 14 durchgeführt, vorzugsweise im Bereich von 10 bis 13. Die pH-Werteinstellung kann z.B. durch Zugabe von Hydroxiden von ein- oder zweiwertigen Kationen oder durch Vorlegen eines Säuregruppen einführenden Stoffs, wie z.B. von Natriumsulfit, erfolgen, welcher in wässriger Lösung unter alkalischer Reaktion hydrolysiert.

Die Umsetzung kann sowohl in homogener als auch in heterogener Phase durchgeführt werden. Als Reaktionsmedium wird in der Regel Wasser oder ein Gemisch mit Wasser verwendet, wobei der Anteil des Wassers vorzugsweise mindestens 50 Gew.-% beträgt. Als nichtwässrige Lösungsmittelzusätze kommen insbesondee polare organische Lösungsmittel in Betracht wie z. B. Alkohole oder Säureester. Die Umsetzung kann sowohl im offenen Gefäss als auch im Autoklaven durchgeführt werden, wobei es zweckmässig sein kann, in einer Inertgasatmosphäre, z.B. unter Stickstoff, zu arbeiten.

Die Kondensationsprodukte können, wenn erwünscht, aus ihren nach der Umsetzung erhaltenen Lösungen oder Dispersionen z. B. durch Einengen am Rotationsverdampfer oder durch Sprühtrocknung isoliert werden. Die erhaltenen Lösungen oder Dispersionen können aber auch als solche direkt, also ohne vorherige Isolierung der Kondensationsprodukte, mit den Metallverbindungen umgesetzt werden.

Als Aldehyd- und Keton-Ausgangsmaterialien werden die vorstehend genannten Aldehyde und Ketone eingesetzt, wobei auch Gemische von Ketonen und/oder Aldehyden eingesetzt werden können. Die Aldehyde und Ketone können sowohl in reiner Form als auch als Verbindung mit dem Säuregruppen einführenden Stoff (z. B. als Bisulfit-Additionsverbindung) zum Einsatz gelangen. Sie können sowohl in wässriger als auch in nichtwässriger, beispielsweise alkoholischer Lösung vorgelegt oder zugegeben werden.

Die Umsetzung verläuft bei Aldehyden oder Ketonen mit niedriger Alkylkette besonders rasch und exotherm, während bei Verbindungen mit sterisch anspruchsvollen Substituenten wie z.B. Methyl-iso-butyl-keton oder Benzylaceton, zur vollständigen Umsetzung eine lange thermische Nachbehandlung erforderlich ist.

Als Säuregruppen einführende Verbindungen können alle unter den Kondensationsbedingungen die Säuregruppen einführenden Verbindungen eingesetzt werden, wie z.B. die reinen Säuren, Salze der Säuren mit ein- bis dreiwertigen anorganischen oder organischen Kationen oder Additionsverbindungen, insbesondere Additionsverbindungen mit den erfindungsgemäss verwendeten Aldehyden und Ketonen. Beispiele dafür sind Sulfite, Hydrogensulfite, Pyrosulfite, Bisulfit-Additionsverbindungen von Aldehyden oder Ketonen, Amidosulfonsäure-Salze, Taurin-Salze, Sulfanilsäure-Salze; Hydroxymethansulfinsäure-Salze; Aminoessigsäure-Salze; Phosphorigsäure-Salze.

Die Co-Kondensationsprodukte können durch Umsetzung der Komponenten unter alkalischen pH-Wertbedingungen erhalten werden, wobei nach Art einer Eintopfreaktion vorgegangen werden kann. Im allgemeinen wird der Aldehyd zu einer Lösung oder Suspension der restlichen Komponenten zugegeben; es sind aber auch andere Verfahrensvarianten möglich, wie z.B. Zugabe der Co-Kondensations-Komponente und/oder des Ketons, Zugabe eines Gemisches aus Aldehyd und Säuregruppen einführender Verbindung oder (z. B. im Falle von Sulfit) einer Verbindung des Aldehyds mit der Säuregruppen einführenden Verbindung, Zugabe eines Gemisches aus Keton und Säuregruppen einführender Verbindung oder einer Verbindung des Ketons mit der Säuregruppen einführenden Verbindung zu den restlichen Komponenten, oder gleichzeitiges Vorlegen aller Komponenten.

Die Reaktion springt im allgemeinen bereits bei gelindem Erhitzen an und verläuft dann exotherm, so dass in der Regel gekühlt wird. Zur Erzielung eines gleichmässigen Produkts oder insbesondere beim Einsatz von weniger reaktionsfähigen Ausgangsprodukten ist eine Nacherhitzung zweckmässig, die bis zu mehreren Stunden dauern kann.

Die Umsetzung wird im allgemeinen bei einem pH-Wert von 7 bis 14 durchgeführt, vorzugsweise im Bereich von 10 bis 13. Die pH-Werteinstellung kann z. B. durch Zugabe von Hydroxiden von ein- oder zweiwertigen Kationen oder durch Vorlegen eines Säuregruppen einführenden Stoffs, wie z. B. von Natriumsulfit, erfolgen, welcher in wässriger Lösung unter alkalischer Reaktion hydrolysiert.

Die Umsetzung kann sowohl in homogener als auch in heterogener Phase durchgeführt werden. Als Reaktionsmedium wird in der Regel Wasser oder ein Gemisch mit Wasser verwendet, wobei der Anteil des Wassers vorzugsweise mindestens 50 Gew.-% beträgt. Als nichtwässrige Lösungsmittelzusätze kommen insbesondere polare organische Lösungsmittel in Betracht wie z. B. Alkohole oder Säureester. Die Umsetzung kann sowohl im offenen Gefäss als auch im Autoklaven durchgeführt werden, wobei es zweckmässig sein kann, in einer Inertgasatmosphäre, z.B. unter Stickstoff, zu arbeiten.

Die Co-Kondensationsprodukte können, wenn erwünscht, aus ihren nach der Umsetzung erhaltenen Lösungen oder Dispersionen z.B. durch Einengen am Rotationsverdampfer oder durch Sprühtrocknung isoliert werden. Die erhaltenen Lösungen oder Dispersionen können aber auch als solche direkt, also ohne vorherige Isolierung der Co-Kondensationsprodukte, mit den Metallverbindungen umgesetzt werden.

Als Aldehyd- und Keton-Ausgangsmaterialien werden die vorstehend genannten Aldehyde und Ketone eingesetzt, wobei auch Gemische von Ketonen und/oder Aldehyden eingesetzt werden können. Die Aldehyde und Ketone können sowohl in reiner Form als auch als Verbindung mit dem Säuregruppen einführenden Stoff (z. B. als Bisulfit-Additionsverbindung) zum Einsatz gelangen. Sie können sowohl in wässriger als auch in nichtwässriger, beispielsweise alkoholischer Lösung vorgelegt oder zugegeben werden.

Die Umsetzung verläuft bei Aldehyden oder Ketonen mit niedriger Alkylkette besonders rasch und exotherm, während bei Verbindungen mit sterisch anspruchsvollen Substituenten wie z.B. Methyl-iso-butyl-keton oder Benzylaceton, zur vollständigen Umsetzung eine lange thermische Nachbehandlung erforderlich ist.

Als Säuregruppen einführende Verbindungen können alle unter den Kondensationsbedingungen die Säuregruppen einführenden Verbindungen eingesetzt werden, wie z.B. die reinen Säuren, Salze der Säuren mit ein- bis dreiwertigen anorganischen oder organischen Kationen oder Additionsverbindungen, insbesondere Additionsverbindungen mit den erfindungsgemäss verwendeten Aldehyden und Ketonen. Beispiele dafür sind Sulfite, Hydrogensulfite, Pyrosulfite, Bisulfit-Additionsverbindungen von Aldehyden oder Ketonen, Amidosulfonsäuresalze, Taurin-Salze, Sulfanilsäuresalze; Hydroxymethansulfinsäuresalze; Aminoessigsäuresalze; Phosphorigsäuresalze. Die Säuregruppen können aber auch ganz oder teilweise durch Säuregruppen enthaltende Aminoplastbildner, aromatische Verbindungen und/oder deren Kondensate, oder durch entsprechende Säuregruppen enthaltende Ligninsulfonate und/oder Cellulosederivate eingeführt werden.

Als Metallverbindungen sind Verbindungen von Metallen der Gruppen III A bis VIII A und/oder der Gruppen I B bis V B und vorzugsweise ein- oder mehrwertige anorganische oder organische Salze von Metallen der Gruppen VI A bis VIII A und der Gruppen I B bis IV B nach der Definition in Kirk-Othmer, «Encyclopedia of Chemical Technology», Interscience Publishers New York-London-Sydney, 2. Ausgabe 1965, Vol. 8, S. 94–96 geeignet. Besonders geeignete Salze sind dabei leicht lösliche Salze, da bei ihnen die Bildung der Metallverbindung besonders rasch abläuft. Grundsätzlich können jedoch auch gering- bis schwerlösliche Metallverbindungen, wie z.B. die nahezu unlöslichen Hydroxide oder Carbonate von Schwermetallen eingesetzt werden, sofern sie in einer wirtschaftlich sinnvollen Zeit die erfindungsgemässen Metallverbindungen mit den Keton/Aldehyd-Basisharzen ergeben. Beispiele für Metallverbindungen sind zwei- und vierwertige Mangansalze, zweiwertige Nickelsalze, zwei- und vierwertige Bleisalze, drei- und sechswertige Chromverbindungen, zwei- und dreiwertige Eisenverbindungen, ein- und dreiwertige Thalliumverbindungen, ein- und zweiwertige Kupfer- und Quecksilberverbindungen, dreiwertige Wismutverbindungen. Als Salze kommen alle üblichen Salze anorganischer oder organischer Säuren in Betracht, beispielsweise die Salze der Halogenwasserstoffsäuren, Schwefelsäuren, Phosphorsäuren, Salpetersäuren, Essigsäure, Ameisensäure und dergleichen; dabei ist allerdings zu berücksichtigen, dass zweckmässigerweise keine zu schwer wasserlöslichen Salze verwendet werden sollten.

Als Metallkomplexverbindungen können alle neutralen, anionischen oder kationischen Metallkomplexe von Metallen der Gruppen III A bis VIII A und I B bis V B des Periodensystems der Elemente verwendet werden, die bei den Umsetzungsbedingungen weniger stabil sind als die angestrebte Metallverbindung, so dass das Metall aus dem schwächeren Komplex in die stabilere Metallverbindung übertreten kann; vorzugsweise werden Komplexverbindungen von Metallen der Gruppen VI A bis VIII A und der Gruppen I B bis IV B verwendet, z.B. Halogeno-, Amino-, Nitro- oder Oxalato-Komplexe der Übergangsmetalle Eisen, Kobalt, Kupfer oder Silber.

Für die Herstellung der Metallverbindungen können grundsätzlich auch Gemische von ein oder mehreren Metallsalzen und/oder Metallkomplexen verwendet werden. Diese gemischten Metallverbindungen können zur Erzielung bestimmter Eigenschaften, beispielsweise der Kombination der für ein Metall typischen Wirkung mit dem Effekt eines anderen Metalls besonders zweckmässig sein und sind dann bevorzugt.

Die Herstellung der Metallverbindungen erfolgt im allgemeinen durch Umsetzung der Kondensations- bzw. Co-Kondensationsprodukte auf Keton/Aldehyd-Basis mit den Metallsalzen bzw. Metallkomplexen. Sie ist an keinen speziellen pH-Wert gebunden und kann im sauren, neutralen oder alkalischen Medium ablaufen. So ist es z.B. möglich, die Synthese der Metallverbindung in einem pH-Wert-Bereich durchzuführen, in dem das eingesetzte, schwer lösliche Metallsalz oder der Metallkomplex besser löslich sind, wodurch eine Steigerung der Umsetzungsgeschwindigkeit erreicht wird. So ist es z.B. zweckmässig, die Hydroxide oder Carbonate von Schwermetallen vorzugsweise bei sauren pH-Wert-Bedingungen mit dem Keton-Aldehyd-Harz umzusetzen, während z.B. Zinkoxid oder Aluminiumhydroxid zweckmässigerweise in stark alkalischer Lösung als Zinkat- bzw. Aluminat-Komplexe eingesetzt werden und so eine rasche Umsetzung zur Metallverbindung gewährleisten. Bei der Herstellungsweise unter sauren oder alkalischen Bedingungen ist es auch möglich, das Metall in elementarer Form zuzugeben, sofern es sich unter diesen Bedingungen auflöst, und dadurch das Metallsalz für die Umsetzung mit dem Harz in situ zu erzeugen. Beispiele hierfür sind die Zugabe von Eisenpulver zu einer sauer eingestellten Lösung des Ausgangsharzes oder das Auflösen von Aluminiumpulver in einer stark alkalischen Harzvorlage. Es ist auch möglich, die Umsetzung bei pH-Werten durchzuführen, bei denen das eingesetzte Metall an sich unlöslich ist und z.B. in Form des Hydroxids vorliegen würde, wenn man das Metall schon in komplexierter Form einsetzt, die bei den genannten pH-Bedingungen ausreichend stabil ist, andererseits aber weniger stabil ist als das angestrebte Endprodukt, so dass das Metall aus der weniger stabilen in die stabilere Verbindung überführt wird.

Die Umsetzung des Keton-Aldehyd-Harzes (Kondensationsprodukt oder Co-Kondensationsprodukt) mit der das Metall einführenden Metallverbindung oder Metallkomplexverbindung kann auf allen Verfahrensstufen bzw. bei allen Varianten der in der für die Herstellung der Kondensationsprodukte oder Co-Kondensationsprodukte in der DE-OS 3 144 673 oder in der deutschen Patentanmeldung P 3 315 152 bzw. vorstehend beschriebenen Verfahren erfolgen. So ist es beispielsweise bei der Herstellung einer Metallverbindung aus reinem Keton/Aldehyd-Harz möglich, das Metallsalz bereits in der Vorlage aus Keton und Säuregruppen einführender Verbindung zuzugeben und anschliessend mit dem Aldehyd umzusetzen, oder ein Keton-Aldehyd-Vorkondensat herzustellen, mit Metallsalz in eine Metallverbindung überzuführen und dann die Säuregruppe einzubringen. Bevorzugtes Verfahren ist jedoch die Zugabe von Metallsalz bzw. Metallkomplexverbindung zum fertigen Kondensationsprodukt, z.B. zu einer Lösung, die die erforderlichen pH-Wert-Bedingungen bereits aufweist oder darauf eingestellt wurde. Zur Herstellung der Metallverbindungen der Co-Kondensationsprodukte kann es in einigen Fällen zweckmässig sein, die Co-Kondensation mit einer bereits als fertige Metallverbindung vorliegenden Komponente vorzunehmen, z.B. eine Metallverbindung des Aceton-Formaldehyd-Sulfit-Harzes mit einem reinen Phenol-Formaldehyd-Harz umzusetzen. Die Umsetzung mit den Metallverbindungen oder Metallkomplexverbindungen kann in dem bei der Herstellung der Kondensationsprodukte oder Co-Kondensationsprodukte erhaltenen Reaktionsgemisch ohne vorherige Isolierung der Kondensations- oder Co-Kondensationsprodukte durchgeführt werden.

Die Herstellung der Metallverbindungen erfolgt vorzugsweise im Temperaturbereich von 10 bis 250°C, insbesondere bei 20 bis 100°C. Die Wahl der jeweils zweckmässigen Umsetzungstemperatur richtet sich insbesondere nach der Löslichkeit der Metallverbindung, nach der Stabilität der Metallkomplexverbindung, und nach der Stabilität der herzustellenden Metallverbindungen des Kondensations- oder Co-Kondensationsproduktes. So können z.B. die sehr stabilen Eisen- und Chrom-Verbindungen von Keton/Aldehyd-Harzen durch einfaches Rühren der Lösung der Harze mit den Metallsalzen bereits bei Raumtemperatur erhalten werden. Im allgemeinen gilt, dass die Bildungsgeschwindigkeit der Metallverbindung bei erhöhter Temperatur rascher ist und daher in Fällen, in denen eine sehr langsame Reaktion zu erwarten ist, indem z.B. das Metallsalz eine geringe Löslichkeit besitzt oder der Metallkomplex nur etwas weniger stabil ist als die herzustellende Metallverbindung, das Arbeiten bei erhöhter Temperatur bevorzugt ist. In solchen Fällen kann auch die Umsetzung bei erhöhtem Druck, beispielsweise im Autoklaven, zweckmässig sein. Es ist jedoch auch möglich, bei niedrigeren Temperaturen zu arbeiten, beispielsweise in heissen Ländern die Umsetzung überhaupt ohne Erhitzen durchzuführen, wenn genügend Zeit zur Verfügung steht, um das Abreagieren, das unter diesen Umständen Wochen dauern kann, abzuwarten.

Die Umsetzung kann sowohl in homogener als auch in heterogener Phase durchgeführt werden. Als Reaktionsmedium wird in der Regel Wasser oder ein Gemisch mit Wasser verwendet, wobei der Anteil des Wassers vorzugsweise mindestens 50 Gew.-% beträgt. Als nichtwässrige Lösungsmittelzusätze kommen insbesondere polare organische Lösungsmittel in Betracht, wie z.B. Alkohole oder Säureester. Die Umsetzung kann sowohl im offenen Gefäss als auch im Autoklaven durchgeführt werden, wobei es zweckmässig sein kann, in einer Inertgasatmosphäre, z.B. unter Stickstoff, zu arbeiten.

Der Anteil an Metall in der erfindungsgemässen Metallverbindung liegt vorzugsweise bei < 70 Gew.-%, und insbesondere zwischen 0,1 und 20 Gew.-%. Er ist insbesondere von den angestrebten Eigenschaften der Metallverbindung abhängig, und beträgt vorzugsweise für Emulgiermittel, Dispergiermittel und Verflüssiger 0,1 bis 12 Gew.-%, für oberflächenaktive Mittel 0,1 bis 5 Gew.-% und für Retentions- und Verdickungsmittel 2 bis 20 Gew.-%. Der Anteil an Metall kann aber auch vom Atomgewicht des Metalls abhängen; Metalle mit niedrigem Atomgewicht können zur Erzielung desselben Effektes in der Regel geringer dosiert werden als Metalle mit hohem Atomgewicht, da für die Eigenschaften der Metallverbindung die Zahl der Metallatome pro Reaktionsstelle massgeblich ist. Aus diesem Grund werden z.B. mit Aluminium bei einer sehr niedrigen Dosierung von 0,5 Gew.-% gute Effekte erzielt, während z.B. bei Bleisalzen zur Erzielung einer feststellbaren Wirksamkeit in der Regel Anteile von mindestens 2 Gew.-% notwendig sind.

Aufgrund ihrer Eigenschaften können die erfindungsgemässen Metallverbindungen als Verdickungsmittel, Emulgiermittel, Dispergiermittel, oberflächenaktive Mittel (Tenside), Retentionsmittel und/oder Verflüssigungsmittel, insbesondere für wässrige Systeme verwendet werden. Die gewünschten Eigenschaften lassen sich dabei durch geeignete Auswahl der Kondensationsprodukte und/oder Co-Kondensationsprodukte bzw. deren Ausgangsverbindungen und deren gegenseitigen Molverhältnissen und/oder der Art der Metalle steuern. Als Beispiele für wässrige Systeme, in denen erfindungsgemässe Produkte vorteilhaft eingesetzt werden können, seien genannt: anorganische Bindemittelsuspensionen und -lösungen, Pigment- und Farbstoffdispersionen, Öl-in-Wasser-Emulsionen, wässrige Kaolin- oder Tonsuspensionen und Öl-Wasser-Kohle-Suspensionen. Infolge ihrer guten Thermostabilität eignen sich die erfindungsgemässen Co-Kondensationsprodukte auch sehr gut als Zusatzmittel für anorganische Bindemittel. Als Dispergiermittel sind sie beispielsweise zur Herstellung von Fliessbeton oder Fliessestrich oder zur Verflüssigung von Tiefbohrzementmischungen geeignet, wofür aufgrund der auftretenden hohen Temperaturen eine ausreichende Temperaturbeständigkeit erforderlich ist. Erfindungsgemässe oberflächenaktive Mittel erniedrigen die Oberflächenspannung wässriger Lösungen und sind z.B. als Schäumerzusatz bei der Herstellung von Schaumbeton geeignet. Ebenso können sie als Luftporen einführende Mittel für Mörtel oder Beton oder als grenzflächenaktiver Zusatz bei der tertiären Erdölförderung Verwendung finden. Als Retentionsmittel eignen sie sich zur Herstellung von Suspensionen hydraulischer Bindemittel, welche gutes Wasserrückhaltevermögen aufweisen (z.B. bei Tiefbohrzementschlämmen oder bei Fliesenklebern), und als Verdickungsmittel eignen sie sich zum Beispiel in der Erdöltechnik sehr gut zur Viskositätserhöhung wässriger Lösungen oder Suspensionen.

Gegenstand der Erfindung ist deshalb auch die Verwendung der erfindungsgemässen Mittel als Verdickungsmittel, Retentionsmittel, oberflächenaktives Mittel, Emulgiermittel, Dispergiermittel und/oder Verflüssigungsmittel, insbesondere als Zusatzmittel für wässrige Systeme.

Vorzugsweise werden die Produkte in Form von Lösungen oder Dispersionen, insbesondere in Form wässriger Lösungen oder Dispersionen, verwendet. Der Feststoffgehalt dieser Zubereitungen beträgt im allgemeinen 10 bis 70, insbesondere 20 bis 50 Gew.-%.

Es können auch zwei oder mehrere der erfindungsgemässen Produkte mit gleicher, ähnlicher und/oder auch verschiedener Wirksamkeit verwendet werden, oder deren Gemische mit einem oder mehreren bekannten Zusatzmitteln mit gleicher, ähnlicher und/oder verschiedener Wirksamkeit, wie z.B. Gemische mit bekannten Dispergiermitteln, Tensiden oder Betonzusatzmitteln. Auf diese Weise lassen sich die Eigenschaften der Endprodukte oft noch zusätzlich verändern oder differenzieren.

Zur Erzielung der gewünschten Eigenschaften der erfindungsgemässen Metallverbindungen geht man zweckmässigerweise von Kondensationsprodukten und/oder Co-Kondensationsprodukten von Aldehyden und Ketonen aus, bei denen bereits die gewünschten Eigenschaften vorherrschen:

Die vorherrschenden Eigenschaften der Kondensations- und Co-Kondensationsprodukte hängen insbesondere von der Art und dem Molverhältnis der Komponenten ab. Der hydrophile Charakter nimmt mit sinkendem Anteil der Säuregruppen ab, wobei in der Regel bei einem Wert <0,15 Mol (bei den Kondensationsprodukten) bzw. <0,02 Mol (bei den Co-Kondensationsprodukten) eine vollständige Wasserlöslichkeit nicht mehr zu erzielen ist. Für Dispergiermittel eignen sich als Carbonylverbindungen vorzugsweise Formaldehyd, Glyoxal und Aceton, und ein Verhältnis Keton/Aldehyd/Säuregruppen von 1/1–18/0,25–3,0, für oberflächenaktive Stoffe vorzugsweise Aldehyde und Ketone mit längeren Alkylresten oder mit Aralkylresten, die mindestens mehr als ein Kohlenstoffatom enthalten, und ein Verhältnis Keton/Aldehyd/Säuregruppen von 1/1–6/0,05–1, und für Retentions- und Verdickungsmittel Aldehyde und Ketone mit Alkylresten, die bis zu drei Kohlenstoffatome enthalten, und ein Molverhältnis Keton/Aldehyd/Säuregruppen von 1/2–6/0,6–2. Für Dispergiermittel für salzhaltige Zementationssysteme kann es auch zweckmässig sein, von einem Kondensationsprodukt aus Keton, Aldehyd und Säuregruppen einführender Verbindung auszugehen, das die Komponenten Keton, Aldehyd und Säuregruppen einführende Verbindung im Molverhältnis 1/1–18/0,25–3,0 enthält und durch Umsetzung dieser Komponenten bei einer Temperatur zwischen 60 und 85°C, vorzugsweise bei einem pH-Wert von 8 bis 14, hergestellt worden ist, wie es in der deutschen Patentanmeldung P 3 344 291 beschrieben wird. Weiterhin bestimmt die Art der Co-Kondensationskomponente die vorherrschenden Eigenschaften der Co-Kondensationsprodukte: Umsetzung des Keton-Aldehyd-Harzes mit Aminoplastbildnern, aromatischen Verbindungen und/oder deren Kondensationsprodukten bewirkt eine Verbesserung der Dispergiereigenschaften, während durch Co-Kondensation mit Cellulosederivaten Retentions- bzw. Verdickungswirkung des Harzproduktes erzielt werden kann. Der Einbau von Ligninsulfonatharzen bedingt sowohl eine Erhöhung der Dispergierwirkung als auch der oberflächenaktiven Eigenschaften. Durch eine Kombination der für die spezifischen Eigenschaften vorzugsweise angewandten Bedingungen, z.B. durch Kombination der für eine bestimmte Eigenschaft besonders geeigneten Art der Ausgangsmaterialien mit dem für eine andere Art bevorzugten Molverhältnis können auch, wenn dies erwünscht ist, Mischeigenschaften erzielt werden.

Ausser von der Art der Kondensationsprodukte und/oder Co-Kondensationsprodukte werden die Eigenschaften der erfindungsgemässen Metallverbindungen insbesondere auch durch die Art und Menge des Metalls beeinflusst. So setzt man z.B. zur Herstellung von als Dispergiermittel geeigneten Produkten nach den vorstehenden Kriterien ausgewählte Kondensationsprodukte oder Co-Kondensationsprodukte, bei denen bereits die gewünschten Eigenschaften vorherrschen, vorzugsweise mit Metallen einer niedrigen Oxidationsstufe, insbesondere von 1 bis 3, um, während z.B. zur Herstellung von Retentions- und/oder Verdickungsmitteln vorzugsweise Metalle mit höheren Oxidationsstufen, insbesondere von 4 bis 7, geeignet sind. So erhält man beispielsweise Produkte mit sehr guter Retentionswirkung in Bohrspülungen durch Zugabe von sechswertigen Chrom- oder siebenwertigen Manganverbindungen. Es können auch zwei oder mehrere Metallverbindungen, vorzugsweise mit verschiedenen Metallen, verwendet werden. Durch Mischen zweier Metalle mit verschiedenen Oxidationsstufen, beispielsweise von zweiwertigem Eisen mit sechswertigem Chrom, lassen sich so auch Mischeigenschaften, bei denen, abhängig vom Mengenverhältnis, die eine oder andere Eigenschaft vorherrschen kann, erzielen. Solche Mischeigenschaften lassen sich auch durch Umsetzung der Metallverbindungen und/oder Metallkomplexverbindungen mit zwei oder mehreren Kondensationsprodukten und/oder Co-Kondensationsprodukten mit verschiedenen vorherrschenden Eigenschaften, oder durch Auswahl eines geeigneten Kondensationsprodukts oder Co-Kondensationsprodukts, das bereits Mischeigenschaften besitzt, erreichen, beeinflussen und/oder differenzieren.

Im folgenden werden einige bevorzugte Einsatzgebiete für die erfindungsgemässen Produkte und die mit ihnen erzielten Vorteile aufgeführt:

Dispergiermittel und Verflüssiger können zur Viskositätserniedrigung von Suspensionen anorganischer Bindemittel, wie z.B. Zement- oder Gipsschlämmen, eingesetzt werden und ermöglichen die Herstellung von Fliessbeton oder Beton mit reduziertem Wasseranspruch. Sie eignen sich aber auch zur Verflüssigung wässriger Kohle-, Kohle/Öl- oder Kaolin- und insbesondere von Tonsuspensionen, wie z.B. Bentonit-, Sepiolit- oder Attapulgitschlämmen. Die Wirkung der erfindungsgemässen Metallverbindungen in diesen Systemen ist besonders stark ausgeprägt und bleibt auch bei länger anhaltender hoher Temperaturbelastung, beispielsweise von 300°C, bei Zusatz grosser Mengen an z.B. Natrium-, Kalium-, Calcium- oder Magnesiumsalzen oder bei Änderungen des pH-Wertes der Tonsuspension erhalten. Bei Bentonitsuspensionen steigt z.B. die Dispergierwirksamkeit der erfindungsgemässen Metallverbindungen von Kondensationsprodukten aus Ketonen und Aldehyden gegenüber den entsprechenden Kondensationsprodukten ohne Metall (Wirkung = 100%) bis auf 500% an. Gute Wirksamkeit besteht auch hinsichtlich der Dispergierung bzw. Emulgierung von Wasser-Öl- oder Öl-Wasser-Emulsionen, deren wässrige Phase ein Tonmineral, wie z.B. Bentonit, enthalten kann und die in der Erdölbohrtechnik häufig eingesetzt werden. So sind die erfindungsgemässen Metallverbindungen zur Herstellung der in der Bohrtechnik als «Invertemulsionsspülungen» bezeichneten Systeme erheblich besser geeignet als handelsübliche reine oder mit Schwermetallen wie Eisen und Chrom modifizierte Lignosulfonate.

Retentionsmittel auf der Basis der erfindungsgemässen Metallverbindungen eignen sich allgemein zur Erzielung von Wasserrückhaltevermögen in wässrigen oder wasserhaltigen Systemen. Unter wässrigen Systemen werden dabei z.B. Suspensionen von anorganischen Bindemitteln, wie Zement oder Gips, von Tonmineralien, wie Bentonit oder Attapulgit, oder von Erdalkalicarbonaten und -hydroxiden, wie z.B. Kreide oder Magnesiumhydroxid, in Wasser verstanden, während wasserhaltige Systeme beispielsweise Kohle-Wasser-Öl-Suspensionen oder Wasser-Ton-Öl-Gemische sein können. So zeigen die Metallverbindungen in wässrigen Tiefbohrzementschlämmen oder in wässrigen Tonsuspensionen, die in der Erdöltechnik als Bohrspülungen häufig verwendet werden, sehr gute Wirkung hinsichtlich einer Verringerung des Presswassers, welches bei der Zirkulation der Bohrspülung im Bohrloch an poröse Formationen abgegeben wird. Ein besonderer Vorteil der erfindungsgemässen Produkte besteht dabei darin, dass diese Retentionswirkung auch bei erhöhten Temperaturen, beispielsweise über 200°C erhalten bleibt. Dadurch ergeben sich Einsatzmöglichkeiten bei sehr tiefen Bohrungen, bei welchen die handelsüblichen Produkte auf Lignosulfonat-Basis aufgrund ihrer geringeren thermischen Stabilität versagen. Die Retentionswirkung der erfindungsgemässen Metallverbindungen kann aber auch zur Erreichung von Wasserrückhaltevermögen in Baustoffmischungen, z.B. für Mörtel oder Putze, oder für Unterwasserbeton genutzt werden. Ebenso möglich ist ihr Einsatz als Zusatzmittel zur Verhinderung des Blutens oder Sedimentierens von Beton.

Verdickungsmittel auf der Basis der erfindungsgemässen Metallverbindungen eignen sich beispielsweise zur Viskositätserhöhung in Suspensionen anorganischer Bindemittel oder Tonmineralien, wie z.B. Zement und Gips oder von Bentonit. Bevorzugte Anwendungen umfassen die Verdickung von Portland- oder Tiefbohrzementschlämmen, von Mauer- oder Putzmörteln sowie von tonhaltigen Bohrspülungen auf der Basis von Süss- oder Salzwasser. Ebenso möglich ist auch der Einsatz der erfindungsgemässen Metallverbindungen als Verdickungsmittel für Süss- oder Salzwasersysteme, welche bei der Instandsetzung oder Inbetriebnahme von Bohrlöchern sowie bei der Behandlung von Lagerstätten, wie beispielsweise dem Polymer- oder Micellarfluten, verwendet werden. Ein besonderer Vorteil der erfindungsgemässen Verdickungsmittel besteht bei dieser Anwendung in der sehr guten Temperatur-, pH-Wert- und Scherstabilität der verdickten Lösungen, wodurch sich die geschilderten Anwendungen besonders wirtschaftlich und ohne Qualitätsverlust bei Langzeitanwendungen durchführen lassen.

Oberflächenaktive Mittel auf der Basis der erfindungsgemässen Metallverbindungen eignen sich insbesondere zur Herstellung von Gas- oder Schaumbeton oder zur Einführung von Mikroluftporen bei der Herstellung von Frost-Tau-beständigem Mörtel oder Beton. Im Bereich der Erdöltechnik ermöglichen sie z.B. die Mobilisierung von Restöl beim Tensid- oder Micellarfluten, wobei z.T., Mikroemulsionen entstehen können.

Die nachfolgenden Herstellungs- und Anwendungsbeispiele erläutern die Erfindung näher, ohne sie darauf zu beschränken. Wenn nicht anders angegeben, bedeuten vorstehend und nachfolgend Teile und Prozentangaben Gewichtsteile und Gewichtsprozente.

Beispiele:
A. Herstellung der Metallverbindungen

Beispiel A.1.
In einem Rührbehälter mit Innenthermometer, Rückflusskühler und Vorratsgefäss legt man in der angegebenen Reihenfolge
432 Gew.-Teile Wasser
189 Gew.-Teile Natriumsulfit sowie
165 Gew.-Teile Aceton
vor und erhitzt die Suspension auf 56°C.

Sobald der Acetonrückfluss eingesetzt hat, tropft man insgesamt 900 Gew.-Teile einer 30%igen Formaldehydlösung zum Reaktionsgut zu. Wegen der stark exothermen Reaktion verfährt man dabei so, dass man das erste Zehntel der Formaldehydlösung langsam und gleichmässig zugibt und dann das Anspringen der Reaktion abwartet, was sich durch beginnende Gelbfärbung der Vorlage und verstärkten Acetonrückfluss äussert. Nach dem Abklingen dieser exothermen Anfangsphase gibt man das restliche Formalin zu und lässt dabei die Temperatur des Ansatzes zum Siedepunkt ansteigen. Im Anschluss an die Formaldehydzugabe führt man noch eine 30 Minuten dauernde thermische Nachbehandlung des Ansatzes bei 95°C durch.

Zu dieser 95°C heissen Harzlösung mit einem Feststoffgehalt von 30% und einem pH-Wert von 12 setzt man 283 Gew.-Teile einer 40%igen wässrigen Lösung von Eisen (II)-sulfat-Heptahydrat zu und erhitzt weitere 2 h zum Sieden. Die eingebrachte Menge des Eisensalzes entspricht einer Zugabe von 4,5% Eisen, bezogen auf das eingesetzte Harz.

Die erhaltene Lösung an Metallverbindung weist einen Feststoffgehalt von 27% auf. Ihre Brookfield-Viskosität nach dem Abkühlen auf Raumtemperatur beträgt 270 mPa.s.

Das Produkt besitzt Dispergiereigenschaften und eignet sich beispielsweise zur Viskositätserniedrigung von Zementschlämmen.

Beispiel A.2.

Im Reaktionsgefäss von Beispiel A.1. legt man nacheinander

    775 Gew.-Teile Wasser

    310 Gew.-Teile Natriumhydroxid

    581 Gew.-Teile Aminoessigsäure sowie

    450 Gew.-Teile Aceton

vor und erhitzt bis zum Einsetzen eines Acetonrückflusses (ca. 56°C).

Anschliessend setzt man nach der in Beispiel A.1. beschriebenen Weise 1884 Gew.-Teile einer 37%igen Formaldehydlösung aus dem Vorratsgefäss zu, wobei die Temperatur des Ansatzes auf 80°C ansteigen darf. Nach dem Ende der Formalinzugabe kocht man zur Vervollständigung der Kondensation 24 h am Rückfluss.

Die erhaltene alkalische Harzlösung mit einem Feststoffgehalt von 36% wird noch heiss mit 50%iger Schwefelsäure auf einen pH-Wert von 4 eingestellt, anschliessend mit 222 Gew.-Teilen einer 40%igen Lösung von $Al_2(SO_4)_3 \cdot 18H_2O$ in 80°C heissem Wasser versetzt und eine Stunde zum Sieden erhitzt. Die Zugabe an Aluminiumsalz entspricht einer Menge von 0,5% Aluminium, bezogen auf eingesetztes Harz.

Die abgekühlte Lösung der Metallverbindung weist einen Feststoffgehalt von 33,5% auf und ist niedrigviskos. Ihr pH-Wert beträgt 4.

Das Produkt wirkt als Dispergiermittel und kann beispielsweise zur Verringerung des Wasseranspruchs von Mörtel eingesetzt werden.

Beispiel A.3.

    900 Gew.-Teile Wasser

    378 Gew.-Teile Natriumsulfit sowie

    278 Gew.-Teile Aceton

werden im Reaktionsgefäss von Beispiel A.1. vorgelegt und nach dem dort beschriebenen Verfahren mit 1800 Gew.-Teilen einer 30%igen Formaldehydlösung zur Umsetzung gebracht.

Im Anschluss an die 30 Min. dauernde thermische Nachbehandlung bei 95°C kühlt man den Ansatz auf Raumtemperatur ab und stellt mit Essigsäure auf einen pH-Wert von 4 ein. Dann gibt man zu der 29%igen Harzlösung 478 Gew.-Teile einer 40%igen wässrigen Lösung von Eisen (III) sulfat (mit einem Kristallwassergehalt von 8,85%) zu und rührt 2 h bei Raumtemperatur. Dabei bildet sich eine 30%ige Lösung der Eisenverbindung mit einem pH-Wert von 8.

Zur Darstellung der Eisen-Chrom-Verbindung setzt man der Lösung der Eisenverbindung 348,5 Gew.-Teile einer 40%igen wässrigen Lösung von Natriumdichromat-Dihydrat zu und rührt erneut 2 h bei Raumtemperatur.

Die Zugaben an Eisen- bzw. Chromsalz entsprechen einer Menge von jeweils 5,0% Eisen bzw. Chrom, bezogen auf eingesetztes Harz. Die erhaltene braun gefärbte Lösung der Eisen-Chrom-Verbindung weist einen Feststoffgehalt von 29% auf. Ihre Brookfield-Viskosität beträgt bei Raumtemperatur 17 mPa.s.

Die Eisenverbindung besitzt Dispergierwirkung, die Eisen-Chrom-Verbindung verfügt sowohl über Dispergier- als auch Retentionseigenschaften.

Beispiel A.4.

Der Rührbehälter von Beispiel A.1. wird nacheinander mit

    2000 Gew.-Teilen Wasser

    625 Gew.-Teilen Taurin

    200 Gew.-Teilen Natriumhydroxid sowie

    580 Gew.-Teilen Aceton

beschickt. Anschliessend erwärmt man das Reaktionsgut auf 56°C und gibt aus dem Vorratsgefäss insgesamt 3000 Gew.-Teile einer 30%igen wässrigen Glyoxal-Lösung zu, wobei die Temperatur des Ansatzes auf 65°C ansteigen darf. Im Anschluss an die Aldehyd-Zugabe führt man eine 6 Stunden dauernde Nacherhitzung im Temperaturbereich von 65 bis 70°C durch.

Die so erhaltene Lösung des Aceton-Glyoxal-Harzes weist einen Feststoffgehalt von 23,5% auf. Zur Überführung in eine Metallverbindung versetzt man die heisse Harzlösung mit 367,5 Gew.-Teilen einer 40%igen Lösung von Kupfer (II) sulfat-Pentahydrat in 80°C heissem Wasser und rührt 2 Stunden bei 85°C. Die Zugabe an Kupfersalz entspricht einem Gehalt von 2,5% Kupfer, bezogen auf eingesetztes Aceton-Glyoxal-Harz.

Die abgekühlte Lösung der Kupferverbindung wird mit 50%iger Natronlauge auf einen pH-Wert von 7,5 eingestellt. Die Brookfield-Viskosität der 21%igen Lösung beträgt 12 mPa.s.

Das Produkt besitzt Dispergiereigenschaften und verflüssigt z.B. wässrige Schlämmen sehr gut.

Beispiel A.5.

Ein offenes Reaktionsgefäss mit Rührwerk, Thermometer, Rückflusskühler und Vorratsgefäss wird in der angegebenen Reihenfolge mit

424 Gew.-Teilen Wasser

227 Gew.-Teilen Natriumsulfit sowie

393 Gew.-Teilen Cyclohexanon

beschickt und diese Suspension auf 90 °C aufgeheizt. Anschliessend lässt man aus dem Vorratsgefäss insgesamt 1000 Gew.-Teile 30%iger Formaldehydlösung langsam in die Vorlage einfliessen, wobei die Temperatur des Reaktionsgutes auf 100 °C ansteigen darf. Im Anschluss an die Formalinzugabe führt man noch eine 10 Minuten dauernde thermische Nachbehandlung des Ansatzes bei 95–100 °C durch.

Die so erhaltene, gelb gefärbte, 39%ige Harzlösung wird in heissem Zustand mit Phosphorsäure auf pH = 4 gebracht und mit 321 Gew.-Teilen einer 40%igen wässrigen Lösung von Eisen(III)sulfat (mit 8,85% Kristallwasser) auf einmal versetzt. Die Zugabe an Eisensalz entspricht dabei einer Menge von 4% Eisen, bezogen auf das Cyclohexanon-Ausgangsharz. Nach 2 h Rühren bei 95 °C ist die Bildung der Metallverbindung beendet. Der Ansatz wird mit 170 Gew.-Teilen Wasser auf einen Feststoffgehalt von 33% abgedünnt, dann auf Raumtemperatur abgekühlt und anschliessend auf pH = 6 eingestellt. Die Lösung der Metallverbindung weist einen Feststoffgehalt von 33° auf. Ihre Viskosität beträgt bei Raumtemperatur 2 Pa.s.

Das Produkt wirkt als Dispergiermittel, beispielsweise für Bohrspülungen auf Basis von Süsswasser-Ton.

Beispiel A.6.

In einem Rührbehälter mit Innenthermometer werden 1000 Gew.-Teile einer nach Beispiel A.1. hergestellten, 36%igen Lösung des eisenfreien Aceton-Formaldehyd-Sulfit-Harzes vorgelegt und auf 95 °C erhitzt.

Zu dieser Vorlage fügt man 1000 Gew.-Teile an 36%iger, 95 °C heisser wässriger Lösung eines handelsüblichen Ferrochromlignosulfonats mit 1,25 Gew.-% Eisen sowie 3,5 Gew.-% Chrom und setzt weiterhin 75 Gew.-Teile Salicylsäure sowie 75 Gew.-Teile Paraformaldehyd zu. Das Reaktionsgemisch wird 6 Stunden bei einem pH-Wert von 4–5 gekocht.

Die Lösung enthält eine Eisen-Chrom-Verbindung des Co-Kondensationsprodukts von Linginsulfonat mit dem Aceton-Formaldehyd-Harz. Sie wird mit 50%iger Natronlauge auf einen pH-Wert von 8 eingestellt und besitzt einen Feststoffgehalt von 29%. Ihre Brookfield-Viskosität beträgt bei Raumtemperatur 42 mPa.s.

Die Metallverbindung besitzt Dispergiereigenschaften und kann z.B. zur Verflüssigung von Mörtel dienen.

Beispiel A.7.

Das Reaktionsgefäss von Beispiel A.1. wird mit

3700 Gew.-Teilen Wasser

1890 Gew.-Teilen Natriumsulfit sowie

2100 Gew.-Teilen Aceton

beschickt und unter Rühren auf 56 °C erhitzt. Anschliessend setzt man nach der im Beispiel A.1. beschriebenen Methode mit insgesamt 9000 Gew.-Teilen einer 30%igen Formaldehyd-Lösung um, wobei die Temperatur des Reaktionsgutes auf 85 °C ansteigen darf. Im Anschluss an die Aldehydzugabe rührt man 2 Stunden bei 85 °C und fügt zum Ausgleich des eintretenden Viskositätsanstiegs der Lösung insgesamt 14 000 Gew.-Teile an Wasser portionsweise zu.

Die so erhaltene Lösung des Aceton-Formaldehyd-Harzes mit einem Feststoffgehalt von 17% dient als Ausgangskomponente für die Co-Kondensation mit einem Phenol-Formaldehyd-Harz, welches wie folgt bereitet wird:

610 Gew.-Teile Wasser

1260 Gew.-Teile einer 30%igen Formaldehyd-Lösung

940 Gew.-Teile Phenol sowie

138 Gew.-Teile einer 20%igen Natronlauge werden im Reaktionsgefäss von Beispiel A.1. in der angegebenen Reihenfolge vorgelegt und unter Rühren auf 100 °C erhitzt. Dabei tritt nach Erreichen einer Temperatur von 60–75 °C eine leicht exotherme Reaktion unter Gelbfärbung der Lösung ein. Sobald die Temperatur von 100 °C erreicht ist, rührt man noch 5 Minuten und kühlt dann auf Raumtemperatur ab.

Die Lösung des Phenol-Formaldehyd-Harzes weist einen Feststoffgehalt von 45% auf und reagiert alkalisch.

Zur Co-Kondensation der beiden Harzkomponenten versetzt man die oben hergestellte Menge an Phenol-Formaldehyd-Harz mit 4000 Gew.-Teilen des Aceton-Formaldehyd-Harzes, stellt mit Schwefelsäure auf einen pH-Wert von 7,5 ein und fügt 136 Gew.-Teile Paraformaldehyd zu. Dieses Reaktionsgemisch wird 5 Stunden unter Rühren bei 95 °C gehalten, wobei zum Ausgleich des eintretenden Viskositätsanstiegs mit insgesamt 5000 Gew.-Teilen heissen Wassers verdünnt wird.

Die Lösung des Aceton/Phenolharz-Co-Kondensats weist nach dem Abkühlen auf Raumtemperatur eine Brookfield-Viskosität von 1300 mPa.s auf. Ihr Feststoffgehalt beträgt 14%.

Die Herstellung der Metallverbindung erfolgt, indem 6000 Gew.-Teile der Lösung des Co-Kondensationsprodukts mit Natronlauge auf einen pH-Wert von 10 eingestellt, mit 131 Gew.-Teilen Zirkonium(IV)sulfat-Tetrahydrat versetzt und 3 Stunden gekocht werden. Diese Zugabe an Zirkoniumsalz entspricht einer Menge von 4% Zirkonmetall, bezogen auf das eingesetzte Harz-Co-Kondensationsprodukt. Während der Umsetzung zur Metallverbindung tritt ein Viskositätsanstieg der Lösung ein, welcher durch Zugabe von insgesamt 2000 Gew.-Teilen Wasser ausgeglichen wird.

Die abgekühlte Lösung der Metallverbindung wird auf einen pH-Wert von 7 eingestellt. Ihre Brookfield-Viskosität beträgt bei einem Feststoffgehalt von 16% 7700 mPa.s.

Das Produkt besitzt sehr gute Retentionswirkung und ist z.B. für Anwendungen in Süsswasser-Bohrspülungen bis 300 °C geeignet.

Beispiel A.8.

Im Reaktionsgefäss nach Beispiel A.1. werden 3710 Gew.-Teile Wasser

378 Gew.-Teile Natriumsulfit

295 Gew.-Teile Mesityloxid sowie

696 Gew.-Teile Aceton

vorgelegt und unter Rühren auf 60°C erhitzt. Sobald diese Temperatur erreicht ist, setzt man nach der im Beispiel A.1. beschriebenen Weise insgesamt 3000 Gew.-Teile einer 30%igen Formaldehyd-Lösung aus dem Vorratsgefäss zu und führt im Anschluss daran eine 2 h dauernde thermische Nachbehandlung des Ansatzes bei 95°C durch. Dabei muss die Harzlösung infolge des eintretenden Viskositätsanstieges nach und nach mit insgesamt 7500 Gew.-Teilen an heissem Wasser verdünnt werden. Die so erhaltene Harzlösung weist einen Feststoffgehalt von 12% auf und reagiert alkalisch (pH = 12).

Zur Herstellung der Metallverbindung stellt man die Harzlösung mit 50%iger Schwefelsäure auf pH = 4 ein, fügt 600 Gew.-Teile Wasser hinzu und gibt bei 95°C 2100 Gew.-Teile einer heissen, 10%igen wässrigen Kaliumpermanganat-Lösung zu und hält den Ansatz 3 Stunden bei 90 bis 95°C. Diese Zugabe an Mangansalz entspricht einem Gehalt von 4% Mangan, bezogen auf eingesetztes Ausgangsharz.

Während der Umsetzung wird der pH-Wert der Lösung laufend kontrolliert und gegebenenfalls auf 4 nachgestellt. Zum Ausgleich des eintretenden Viskositätsanstiegs fügt man portionsweise insgesamt 6200 Gew.-Teile an heissem Wasser zu.

Nach beendigter Umsetzung kühlt man die Lösung der Metallverbindung auf Raumtemperatur ab und stellt auf einen schwach alkalischen pH-Wert ein. Die Brookfield-Viskosität der Lösung mit einem Feststoffgehalt von 6% beträgt 760 mPa.s. bei 20°C.

Das Produkt wirkt als Retentions- und/oder Verdickungsmittel.

Beispiel A.9.

422 Gew.-Teile Wasser

86 Gew.-Teile Natriumsulfit sowie

128 Gew.-Teile Diacetonalkohol

werden im Reaktionsgefäss von Beispiel A.1. vorgelegt und unter Rühren auf 60°C erhitzt.

Anschliessend setzt man nach der im Beispiel A.1. beschriebenen Methode mit 510 Gew.-Teilen 30%iger Formaldehyd-Lösung aus dem Vorratsgefäss um und führt eine 2 Stunden dauernde thermische Nachbehandlung des Ansatzes bei 95°C durch. Dabei muss die Harzlösung nach Massgabe des Kondensationsfortschritts mit insgesamt 450 Gew.-Teilen Wasser nach und nach verdünnt werden.

Nach beendigter Kondensation stellt man mit Schwefelsäure auf pH = 7,5, verdünnt mit 300 Gew.-Teilen Wasser und kühlt auf Raumtemperatur ab. Die Harzlösung weist einen Feststoffgehalt von 15,1% und eine Brookfield-Viskosität von 2150 mPa.s auf.

Zur Darstellung der Metallverbindung erhitzt man die Lösung des Ausgangsharzes auf 95°C, setzt 208 Gew.-Teile einer 40%igen wässrigen Lösung von Natriumdichromat-Dihydrat zu und rührt 2 Stunden bei 95°C. Die zugefügte Menge an Chromsalz entspricht einem Gehalt von 10% Chrom, bezogen auf das Ausgangsharz. Die Bildung der Chromverbindung des Harzes erfolgt unter beträchtlichem Viskositätsanstieg, so dass während der Umsetzung laufend mit heissem Wasser verdünnt werden muss, um die Rührfähigkeit des Ansatzes zu erhalten. Die hierfür benötigte Menge an Wasser beträgt insgesamt 1700 Gew.-Teile.

Die erhaltene Lösung der Chromverbindung wird auf Raumtemperatur abgekühlt und mit 50%iger Natronlauge auf pH = 7,5 eingestellt. Ihre Brookfield-Viskosität beträgt bei einem Feststoffgehalt von 8,6% 3600 mPa.s.

Das Produkt besitzt Verdickungswirkung, beispielsweise an wässrigen Lösungen oder Ton-Suspensionen.

Beispiel A.10.

Im Reaktionsgefäss von Beispiel A.1. bereitet man eine Auflösung von 166 Gew.-Teilen Zinkoxid in 4440 Gew.-Teilen einer 60%igen wässrigen Zitronensäurelösung. Sobald das Zinkoxid in Lösung gegangen ist, stellt man mit 50%iger Natronlauge auf pH = 7,5 ein.

Zu dieser Vorlage gibt man weiterhin

2240 Gew.-Teile Wasser

2333 Gew.-Teile Natriumsulfit sowie

3360 Gew.-Teile Methylethylketon

und erhitzt unter Rühren auf 70°C. Anschliessend setzt man nach der im Beispiel A.1. beschriebenen Weise mit 9333 Gew.-Teilen einer 30%igen Formaldehyd-Lösung um und führt die 30 Minuten dauernde thermische Nachbehandlung bei 95°C durch. Nach dem Abkühlen der Lösung wird mit 50%iger Schwefelsäure auf einen schwach alkalischen pH-Wert eingestellt.

Die Lösung der Zinkverbindung weist einen Feststoffgehalt von 43% und eine Brookfield-Viskosität von 40 mPa.s auf. Die Oberflächenspannung einer 1%igen Abdünnung beträgt 42 mN.m⁻¹.

Das eingesetzte Zinkoxid entspricht einem Gehalt von 2%, bezogen auf das eingesetzte Keton-Aldehyd-Harz.

Das Produkt ist grenzflächenaktiv und eignet sich beispielsweise zur gezielten Einführung von Luftporen in Mörtel oder Beton.

Beispiel A.11.

5973 Gew.-Teile Wasser

2521 Gew.-Teile Natriumsulfit

2403 Gew.-Teile Acetophenon

2100 Gew.-Teile Paraformaldehyd sowie

280 Gew.-Teile Acrolein

werden im Rührbehälter von Beispiel A.1. in der angegebenen Reihenfolge vorgelegt und unter Rühren auf 95°C erhitzt, wobei eine Braunfärbung des Reaktionsgemisches eintritt. Sobald die Temperatur von 95°C erreicht ist, führt man eine 3 Stunden dauernde thermische Behandlung des Ansatzes bei 95°C durch und erhält auf diese Weise eine Harzlösung mit 50% Feststoffgehalt.

Zur Überführung in die Metallverbindung stellt man die noch heisse und stark alkalisch reagierende Lösung des Ausgangsharzes mit Schwefelsäure auf einen pH-Wert von 2,5 ein und setzt dann portionsweise insgesamt 199,6 Gew.-Teile. an Eisenpulver zu. Die Zugabe an Eisenpulver erfolgt dabei mit solcher Geschwindigkeit, dass die mit dem Auflöseprozess des Metalls verbundene Gas- und Schaumentwicklung nicht zu heftig wird. Sobald alles Metall gelöst ist, hält man noch 2 weitere Stunden bei 95°C und kühlt dann auf Raumtemperatur ab.

Die eingesetzte Menge an Eisenmetall entspricht einem Gehalt von 3%, bezogen auf das Keton-Aldehyd-Harz.

Die Lösung der Metallverbindung weist einen Feststoffgehalt von 45% und eine Brookfield-Viskosität von 150 mPa.s auf. Die Oberflächenspannung einer 1%igen Abdünnung beträgt 48,7 mN.m$^{-1}$.

Das Produkt besitzt grenzflächenaktive Eigenschaften und kann z.B. zur Herstellung von Gasbeton dienen.

Beispiel A.12.

Man bereitet eine Vorlage aus

2300 Gew.-Teilen Wasser

6900 Gew.-Teilen Isopropanol

158 Gew.-Teilen Natriumsulfit

122 Gew.-Teilen Amidosulfonsäure

50 Gew.-Teilen Natriumhydroxid

960 Gew.-Teilen Furfurol

1280 Gew.-Teilen Octanal sowie

500 Gew.-Teilen Acetylaceton

und erhitzt in der Apparatur nach Beispiel A.1. 12 Stunden unter Rühren auf 85°C. Dabei bildet sich eine orangebraune Harzlösung mit einem Feststoffgehalt von 11,5%.

Das Ausgangsharz stellt man mit Schwefelsäure auf einen pH-Wert von 2 ein, fügt 113 Gew.-Teile an Blei(II)nitrat zu und kocht erneut 12 Stunden. Anschliessend wird mit Natronlauge auf einen schwach alkalischen pH-Wert (8–9) eingestellt.

Die Zugabe an Bleinitrat entspricht einer Menge von 5%, bezogen auf das eingesetzte Harz.

Die Lösung der Metallverbindung ist niedrigviskos und weist einen Feststoffgehalt von 10% auf. Die Oberflächenspannung einer 1%igen Abdünnung beträgt 30 mN.m$^{-1}$.

Das Produkt wirkt grenzflächenaktiv und erlaubt z.B. die Herstellung von Mikroemulsionen aus Wasser/Öl-Gemischen.

B. Anwendungsbeispiele

Beispiel B.1.

Das Beispiel erläutert die Verflüssigungswirkung erfindungsgemässer Metallverbindungen an Portlandzement-Schlämmen im Vergleich zu einem Produkt auf der Basis einer Metall-Lignosulfonat-Verbindung.

Herstellung und Ausprüfung der Zementschlämmen erfolgte nach der von L.M. Meyer und W.F. Perenchio in «Concrete International» (36–43, Gennaio 1979 – Januar 1979) beschriebenen Methode, bei welcher die Zementschlämme einem sogenannten «Mini-Slump-Test» unterzogen und damit die Verflüssigungswirkung eines Zusatzmittels beurteilt wird.

Zur Durchführung der Prüfung wurden Zementschlämmen mit einem Portlandzement der Festigkeitsklasse 35 F nach der deutschen Norm DIN 1164 bei einem Wasser-Zement-Faktor von 0,48 zu einer homogenen Suspension angerührt und nach der oben zitierten Methode der Durchmesser des Zementleimkuchens bestimmt. Die Prüfung wurde durchgeführt mit einer Zementschlämme ohne Zusatzmittel als Nullversuch, mit einer handelsüblichen Ferrochromverbindung von Lignosulfonat und mit den erfindungsgemässen Metallverbindungen nach den Herstellungsbeispielen A.1. bis A.6. Als Metallverbindung A.3. wurde hier und in den folgenden Beispielen jeweils die Eisenchromverbindung eingesetzt, soweit nicht anders vermerkt. Die Feststoffdosierung der Zusatzmittel betrug in allen Fällen 0,3 Gew.-%, bezogen auf die eingesetzte Zementmenge. Alle Zusatzmittel wurden im Anmachwasser vorgelegt.

Tabelle 1

Ausbreitmasse von Zementschlämmen nach dem «Mini-Slump-Test»

| Zusatzmittel | Ausbreitmass des Zementleimkuchens (rel.-%) |
|---|---|
| Nullversuch | 100 |
| Eisenchromlignosulfonat | 112 |
| A.1. | 141 |
| A.2. | 138 |
| A.3. | 143 |
| A.4. | 161 |
| A.5. | 130 |
| A.6. | 146 |

Die Ergebnisse von Tabelle I zeigen, dass erfindungsgemässe Metallverbindungen Steigerungen der Zementleimausbreitmasse ergeben, welche diejenige des Lignosulfonat-Produktes bei weitem übertreffen. Die Metallverbindungen von Keton-Aldehyd-Harzen besitzen demnach eine wesentlich bessere Verflüssigungswirkung in wässrigen Zementschlämmen.

Beispiel B.2.

Das Beispiel verdeutlicht die Dispergierwirkung erfindungsgemässer Metallverbindungen an Mörtel.

Gemäss der deutschen Norm DIN 1164 bereitet man einen Mörtel aus Portlandzement der Festigkeitsklasse 45 F, Normensand und Leitungswasser, wobei für den Anmischprozess das Mischprogramm RILEM-CEM entsprechend einer Vorschrift des Cembureaus, Paris, benutzt wird, und bestimmt das Ausbreitmass des so erhaltenen Mörtels nach DIN 1164, Ausgabe 1958. Das Ausbreitmass dieses Nullversuchs ohne Zusatzmittel wird gleich 100% gesetzt.

In weiteren Versuchen werden nach derselben Methode Mörtel mit jeweils 1,0 Gew.-% Feststoffdosierung eines handelsüblichen Eisenchromlignosulfonats sowie der Metallverbindungen nach den Beispielen A.1. bis A.6. hergestellt und ihre Ausbreitmasse bestimmt. Die Zusatzmittel werden bei der Mörtelherstellung jeweils im Anmachwasser vorgelegt.

Die Ergebnisse von Tab. II illustrieren die überlegene Dispergierwirkung der erfindungsgemässen Metallverbindungen im Vergleich zum Lignosulfonat-Produkt.

### Tabelle 2

Ausbreitmasse von Mörteln mit Zusatz an Lignosulfonat-Produkten und erfindungsgemässen Metallverbindungen

| Zusatzmittel | Mörtelausbreitmass nach DIN 1164 (rel.-%) |
|---|---|
| Nullversuch | 100 |
| Eisenchromlignosulfonat | 91 |
| A.1. | 136 |
| A.2. | 121 |
| A.3. | 116 |
| A.4. | 142 |
| A.5. | 119 |
| A.6. | 118 |

### Beispiel B.3.

Nach den Beispielen A.1. und A.3. hergestellte Metallverbindungen eignen sich zur Herstellung von Fliessbeton nach den Bestimmungen der «Richtlinien für die Herstellung und Verarbeitung von Fliessbeton» in der Fassung vom Mai 1974, wie sie z.B. in der Zeitschrift «Beton» 24 (1974) auf den Seiten 342 bis 344 zitiert sind.

Ein ebenfalls geprüftes handelsübliches Natriumlignosulfonat und Eisenchromlignosulfonat erfüllen die in den Richtlinien genannten Anforderungen an ein Zusatzmittel zur Herstellung von Fliessbeton nicht.

### Beispiel B.4.

Das Beispiel erläutert den Einsatz erfindungsgemässer Metallverbindungen als wasserreduzierende Zusatzmittel für Mörtel.

450 g Portlandzement der Festigkeitsklasse 35 F nach der deutschen Norm DIN 1164, 1350 g Normensand sowie 229 g Wasser werden mit dem Mischprogramm RILEM-CHEM des Cembureaus, Paris, zu einem Mörtel angerührt und anschliessend das Ausbreitmass und die 7-Tage-Festigkeiten nach DIN 1164 bestimmt. Den Festigkeitswert des Nullversuchs setzt man gleich 100%.

In weiteren Versuchen stellt man Mörtel mit jeweils 1,0 Gew.-% Feststoffdosierung an Zusatzmittel, gelöst im Anmachwasser, her, wobei die Menge an Anmachwasser so gewählt wird, dass der Mörtel mit Zusatzmittel gleiches Ausbreitmass wie der Mörtel des Nullversuchs besitzt. Dieses Verfahren gestattet nach der Beziehung

$$\left(1 - \frac{\text{Wasser-Zement-Faktor des Mörtels mit Zusatzmittel}}{\text{Wasser-Zement-Faktor des Mörtels vom Nullversuch}}\right) \times 100\%$$

die Berechnung der mit einem Zusatzmittel erzielbaren Wassereinsparung.

Die in Tabelle III zusammengefassten Ergebnisse zeigen, dass Metallverbindungen nach den Beispielen A.1. bis A.3. eine drastisch höhere wasserreduzierende Wirkung an Mörtel besitzen als eine vergleichbare handelsübliche Metallverbindung von Lignosulfonat. Die höhere Wassereinsparung der Metallverbindungen auf Keton-Aldehyd-Basis hat eine entsprechende Steigerung der Mörtelfestigkeiten, beispielsweise nach 7 Tagen, zur Folge.

### Tabelle 3

Wasserreduzierung und Festigkeitsentwicklung von Mörtel mit Metallverbindungen auf Lignosulfonat- bzw. Keton/Aldehyd-Basis als Zusatzmittel

| Zusatzmittel | Wasser-Zement-Faktor | Wassereinsparung (%) | 7 d-Festigkeiten Biegezugfestigk. (%) | Druckfestigk. (%) |
|---|---|---|---|---|
| Nullversuch | 0,510 | — | 100 | 100 |
| Eisenchromlignosulfonat | 0,505 | 1,0 | 85 | 59 |
| A.1. | 0,451 | 11,6 | 135 | 122 |
| A.2. | 0,460 | 10,0 | 129 | 118 |
| A.3. | 0,463 | 9,2 | 121 | 115 |

### Beispiel B.5.

Die überlegene Wirkung der erfindungsgemässen Metallverbindungen bei der Viskositätsverringerung von Tiefbohrzementschlämmen verdeutlichen die folgenden Versuche:

Man bereitet nach der vom American Petroleum Institute (API) in Specification 10, «API Specification for Materials and Testing for Well Cements», Ausgabe Januar 1982, festgelegten Vorschrift Zementschlämmen aus einem Tiefbohrzement der API-Klasse G mit einem Wasser-Zement-Faktor von 0,44 und misst die Schlämmenviskositäten an einem Fann-Viskosimeter (Modell 35 SA, Rotor-Bob R 1 B 1) bei 600 UpM. Die Messung bei dieser Schergeschwindigkeit ergibt ein gutes Bild der bei der turbulenten Verpumpung der Zementschlämme im Bohrloch auftretenden Schlämmenviskosität bzw. ihres Fliessverhaltens.

Zur Untersuchung der viskositätsverringernden Wirkung erfindungsgemässer Zusatzmittel mischt man dem oben beschriebenen und bei einer Temperatur von 38°C durchgeführten Nullversuch ohne Zusatzstoff jeweils 0,75 Gew.-% eines handelsüblichen Natriumlignosulfonats, eines Ferrochromlignosulfonats sowie von Metallverbindungen nach den Beispielen A.1. bis A.3. zu. Die Zusatzmittel werden dabei im Anmachwasser gelöst vorgelegt, ihre Dosierungen gelten als Feststoffdosierungen, sofern sie als Lösung eingesetzt wurden. Die entsprechend der API-Vorschrift gemessenen Viskositäten von Schlämmen mit Zusatzmittel werden in Prozent der Viskosität des Nullversuchs umgerechnet.

Da bei den Bohrlochzementationen häufig erhöhte Temperaturen auftreten und den Zementen Salze wie z.B. Natriumchlorid zugemischt werden, wurde die Wirkung der Zusatzmittel noch an einer Zementschlämme geprüft, welche bei 60°C unter Verwendung von 18%iger NaCl-Lösung als Anmachwasser hergestellt wurde.

### Tabelle 4

Viskosität von Tiefbohrzementschlämmen mit viskositätsverringernden Zusätzen

| Zement-schlämme Typ* | Temperatur (°C) | Salzgehalt im Anmachwasser | Zusatzmittel | Relative Schlämmen-viskosität (%), gemessen mit dem FANN-Viskosimeter bei 600 UpM |
|---|---|---|---|---|
| I | 38 | — | — | 100 |
| I | 38 | — | Natriumlignosulfonat | 65 |
| I | 38 | — | Eisenchromlignosulfonat | 64 |
| I | 38 | — | A.1. | 39 |
| I | 38 | — | A.2. | 38 |
| I | 38 | — | A.3. | 40 |
| II | 60 | 18 | — | 100 |
| II | 60 | 18 | Natriumlignosulfonat | 117 |
| II | 60 | 18 | Eisenchromlignosulfonat | 155 |
| II | 60 | 18 | A.1. | 70 |
| II | 60 | 18 | A.2. | 62 |
| II | 60 | 18 | A.3. | 58 |

* Zementschlämme Typ I = Süsswasser als Anmachwasser
Typ II = 18%ige NaCl-Lösung als Anmachwasser

Die in Tabelle IV zusammengefassten Ergebnisse zeigen, dass erfindungsgemässe Metallverbindungen die Viskosität von Tiefbohrzementschlämmen in einem breiten Temperaturbereich und in Gegenwart hoher Salzkonzentrationen wirksam erniedrigen, während Produkte auf Lignosulfonat-Basis nur geringe Effekte aufweisen.

### Beispiel B.6.

Das Beispiel erläutert die Verbesserung der Dispergierwirkung, welche erfindungsgemässe Metallverbindungen im Vergleich zu den reinen Keton-Aldehyd-Ausgangsharzen an Süsswasser-Bohrspülungen zeigen.

Für die Prüfung bereitet man zunächst eine Süsswasser-Bohrspülung durch Einrühren von 75 Gew.-Teilen eines Bentonits, welcher den Anforderungen der OCMA-Spezifikation DFCP-4 entspricht, in 1000 Gew.-Teile Leitungswasser und rührt diese Suspension 24 Stunden. Die so erhaltene Spülung wird als Grundspülung für die weiteren Versuche verwendet.

Zur Prüfung der Dispergierwirkung von Zusatzmitteln versetzt man jeweils 350 Gew.-Teile der obigen Grundspülung mit 1,75 Gew.-Teilen des zu prüfenden pulverförmigen Additivs und mischt am Hamilton Beach Mixer 5 Minuten bei Stufe «high» durch. Anschliessend bestimmt man an einem FANN-Viskosimeter (Modell 35 SA; Rotor-Bob R 1 B 1) Fliesskurve und Anfangs- bzw. Minuten-Gelstärke der Spülung bei Raumtemperatur entsprechend den vom American Petroleum Institute (API) empfohlenen und in der Publikation «Recommended practice for Standard Procedure for Testing Drilling Fluids» (API RP 13 B; 9. Ausgabe Mai 1982) festgelegten Prüfrichtlinien. Aus den Werten der Fliesskurve werden die zur Beurteilung der Dispergierung der Spülung wichtigen Grössen «Scheinbare Viskosität» und «Fliessgrenze» nach dem Bingham-Modell wie folgt berechnet:

Scheinbare Viskosität $=$ $\dfrac{\text{FANN-Wert bei 600 UpM}}{2}$
(mPa.s)

Fliessgrenze in 0,4788 Pa (lbs/100 ft²) =
2 × FANN-Wert bei 300 UpM-FANN-Wert bei
600 UpM

Als Zusatzmittel wurden jeweils die in den Beispielen A.1. bis A.6. beschriebenen reinen Keton-Aldehyd-Harze sowie die aus diesen Harzen durch Umsetzung mit Metallsalzen erhaltenen Metallverbindungen eingesetzt. Alle Additive wurden in Form von Pulvern zugegeben, welche durch Sprühtrocknung aus den gemäss A.1. bis A.6. hergestellten Lösungen erhalten wurden.

Tabelle V fasst die erhaltenen Versuchsergebnisse zusammen. Zur Verdeutlichung der Verbesserung, welche in der Wirkung der Keton-Aldehyd-Harze nach Umsetzung zu den Metallverbindungen eintritt, wurden die Messwerte der Spülungen mit den reinen Harzen jeweils gleich 100% gesetzt und die Messwerte der Spülungen mit den Metallverbindungen hierauf bezogen. Nach dieser Darstellung ist z. B. ersichtlich, dass durch Zugabe von Metallverbindungen anstelle der Keton-Aldehyd-Ausgangsharze eine Verringerung der scheinbaren Viskosität um bis zu 81%, der Fliessgrenze um bis zu 93% und der Anfangs- bzw. 10 Min.-Gelstärken um 98% bzw. 70% möglich sind. Die somit erzielbare drastische Verbesserung der rheologischen Eigenschaften einer Süsswasser-Ton-Spülung beweist die Überlegenheit der erfindungsgemässen Metallverbindungen im Vergleich zu den Keton-Aldehyd-Harzen.

Tabelle 5

Rheologische Eigenschaften einer Süsswasser-Bohrspülung mit Zusatz von Keton-Aldehyd-Harzen und deren Metallverbindungen

| Produkt nach Beispiel | Zusatzmittel | Eigenschaften der Süsswasser-Bohrspülung | | | |
|---|---|---|---|---|---|
| | | Scheinbare Viskosität (rel.-%) | Fliess-Grenze (rel.-%) | Anfangs-Gelstärke (rel.-%) | 10 Min.-Gelstärke |
| A.1. | Harz* | 100 | 100 | 100 | 100 |
| A.1. | Metallverbindung* | 57 | 44 | 63 | 89 |
| A.2. | Harz | 100 | 100 | 100 | 100 |
| A.2. | Metallverbindung | 58 | 42 | 81 | 86 |
| A.3. | Harz* | 100 | 100 | 100 | 100 |
| A.3. | Metallverbindung | 19 | 7 | 2 | 30 |
| A.4. | Harz* | 100 | 100 | 100 | 100 |
| A.4. | Metallverbindung* | 56 | 47 | 87 | 74 |
| A.5. | Harz* | 100 | 100 | 100 | 100 |
| A.5. | Metallverbindung* | 38 | 25 | 56 | 79 |
| A.6. | Harz* | 100 | 100 | 100 | 100 |
| A.6. | Metallverbindung | 40 | 26 | 21 | 39 |

\* Bei diesen Versuchen wurden zur Einstellung eines geeigneten pH-Wertes 1,75 Gew.-Teile 50%ige Natronlauge zur Spülung gegeben.

Beispiel B.7.

Die Dispergierwirkung erfindungsgemässer Metallverbindungen an einer Süsswasser-Bohrspülung, welche mit geringen Mengen an Natrium- oder Calciumsalzen inhibiert oder mit Bariumsulfat beschwert ist, zeigt sich in folgenden Versuchen:

350 Gew.-Teile der Süsswasser-Grundspülung von Beispiel B.6. werden mit 14 Gew.-Teilen Natriumchlorid 5 Minuten am Hamilton Beach Mixer bei Stufe «high» vermischt. Die so erhaltene Bohrspülung ist mit 4% Natriumchlorid inhibiert.

Weitere 350 Gew.-Teile der Grundspülung von Beispiel B.6. werden mit 7 Gew.-Teilen Gips 5 Minuten am Hamilton Beach Mixer verrührt. Hieraus resultiert eine 2%ige Gips-Ton-Spülung.

Andere 350 Gew.-Teile der Grundspülung von Beispiel B.6. verrührt man am Hamilton Beach Mixer 6 Minuten mit 560 Gew.-Teilen eines Schwerspats, welcher der OCMA-Spezifikation DFCP-3 entspricht, und erhält so eine mit 1600 g BaSO₄/l beschwerte Spülung der Dichte 1,92 g/ml.

Diese mit Salzen inhibierten bzw. beschwerten Spülungen werden nun mit jeweils 3,5 Gew.-Teilen, bezogen auf eingesetzte Süsswasser-Grundspülung, an Metallverbindungen nach den Beispielen A.1. bis A.3. ebenfalls 5 Minuten am Hamilton Beach Mixer vermischt und anschliessend die rheologischen Eigenschaften der Spülungen nach der in Beispiel B.6. beschriebenen Methode bestimmt. Die Zusatzmittel gemäss A.1. bis A.3. werden in Form von Pulvern eingesetzt, welche durch Sprühtrocknung aus den Lösungen erhältlich sind.

Die Ergebnisse von Tab. VI verdeutlichen die gute Thinner-Wirkung der erfindungsgemässen Metallverbindungen im Vergleich zu den inhibierten bzw. beschwerten Süsswasser-Bohrspülungen ohne Zusatzmittel.

Tabelle 6

Rheologische Eigenschaften von Bohrspülungen mit Natriumchlorid, Gips und Schwerspat bei Zusatz von Metallverbindungen

| Süsswasser-Ton Spülung mit | Zusatz von Metallverbindung nach Beispiel | Scheinbare Viskosität (rel.-%) | Eigenschaften der Spülung | | |
|---|---|---|---|---|---|
| | | | Fliessgrenze (rel.-%) | Anfangs-Gelstärke (rel.-%) | 10 Min.-Gelstärke (rel.-%) |
| 4% NaCl | — | 100 | 100 | 100 | 100 |
| 4% NaCl | A.1.* | 88 | 81 | 79 | 90 |
| 4% NaCl | A.2. | 33 | 18 | 60 | 93 |
| 4% NaCl | A.3.* | 29 | 12 | 12 | 40 |
| 2% Gips | — | 100 | 100 | 100 | 100 |
| 2% Gips | A.1.* | 33 | 13 | 4 | 75 |
| 2% Gips | A.2. | 50 | 33 | 54 | 96 |
| 2% Gips | A.3.* | 19 | 10 | 4 | 18 |
| 1600 g/l Baryt | — | 100 | 100 | 100 | 100 |
| 1600 g/l Baryt | A.1.* | 37 | 76 | 91 | 89 |
| 1600 g/l Baryt | A.2. | 24 | 36 | 31 | 83 |
| 1600 g/l Baryt | A.3.* | 14 | 9 | 7 | 35 |

* Spülungen wurden zur Einstellung eines geeigneten pH-Wertes mit zusätzlich 1,75 Gew.-Teilen 50%iger Natronlauge vermischt.

Beispiel B.8.

Metallverbindungen der vorliegenden Erfindung eignen sich auch zur Dispergierung von Spülungen auf der Basis eines Salzwasser-Tons.

Man bereitet als Grundspülungen zwei Salzwasser-Tonspülungen durch Eintragen von jeweils 64 Gew.-Teilen Attapulgit, welcher der OCMA-Spezifikation DFCP-1 entspricht, in 1000 Gew.-Teile eines synthetischen Meerwassers gemäss der deutschen Norm DIN 50900 bzw. in dieselbe Menge einer bei 20°C gesättigten Kaliumchloridlösung und rührt die Suspensionen 2 Tage. Die so erhaltenen Salzwasser-Grundspülungen werden vor der Bestimmung ihrer rheologischen Eigenschaften 5 Minuten am Hamilton Beach Mixer bei Stufe «high» aufgemischt.

Zur Prüfung der Verdünnungswirkung erfindungsgemässer Zusatzmittel versetzt man obige Grundspülungen mit jeweils 1,0 Gewichtsprozent der pulverförmigen Metallverbindungen aus den Beispielen A.1. bis A.3. und mischt 5 Minuten am Hamilton Beach Mixer bei Stufe «high» ein.

Tabelle VII zeigt die hervorragende Verbesserung der Spülungsrheologie, welche mit erfindungsgemässen Produkten erzielbar ist.

Tabelle 7

Erniedrigung der scheinbaren Viskosität, Fliessgrenze und Gelstärke von Salzwasser-Tonspülungen durch Metallverbindungen

| Salzwasser-Tonspülung auf Basis | Zusatzmittel nach Herstellungs-beispiel | Scheinbare Viskosität (rel.-%) | Fliessgrenze (rel.-%) | Anfangs-Gelstärke (rel.-%) | 10 Min.-Gelstärke (rel.-%) |
|---|---|---|---|---|---|
| Meerwasser | — | 100 | 100 | 100 | 100 |
| Meerwasser | A.1.* | 17 | 5 | 20 | 50 |
| Meerwasser | A.2. | 15 | 2 | 10 | 50 |
| Meerwasser | A.3.* | 10 | 2 | 20 | 29 |
| gesättigte KCl-Lösung | — | 100 | 100 | 100 | 100 |
| gesättigte KCl-Lösung | A.1. | 10 | 2 | 5 | 21 |
| gesättigte KCl-Lösung | A.2. | 6 | 4 | 5 | 4 |
| gesättigte KCl-Lösung | A.3.* | 10 | 2 | 5 | 17 |

* Spülungen wurden durch Zugabe von 0,5 Gew.-Prozent 50%iger Natronlauge auf einen geeigneten pH-Wert eingestellt

Beispiel B.9.

Die Überführung der Keton-Aldehyd-Harze in Metallverbindungen bewirkt allgemein eine beträchtliche Verbesserung der Wirksamkeit dieser Zusatzmittel bei Anwendungen unter erhöhter Temperatur. Dies lässt sich am Beispiel von Süsswasser-Tonspülungen, welche bei 204°C gealtert wurden, wie folgt zeigen:

Die Süsswasser-Grundspülung von Beispiel B.6. versetzt man mit jeweils 3,0 Gew.-% der pulverförmigen reinen Keton-Aldehyd-Harze und ihrer Metallverbindungen nach den Beispielen A.3. und A.5. und mischt 5 Minuten am Hamilton Beach Mixer bei Stufe «high». Anschliessend füllt man jeweils 450 ml dieser Spülungen in 500 ml-Alterungszellen ein, verschliesst und rollt die Zellen 24 Stunden in einem Rollerofen mit 204°C Innentemperatur. Nach beendeter Alterung nimmt man die Zellen heraus, kühlt innerhalb von 2 Stunden auf Raumtemperatur ab und führt nach 5minütigem Aufmischen am Hamilton Beach Mixer die Messung der rheologischen Eigenschaften der Spülung am FANN-Gerät durch.

Die in Tabelle VIII zusammengefassten Ergebnisse verdeutlichen, dass die Dispergierwirkung erfindungsgemässer Metallverbindungen bei Anwendungen unter erhöhter Temperatur allgemein wesentlich besser ist als diejenige der reinen Keton-Aldehyd-Ausgangsharze.

Tabelle 8

Vergleich der Wirksamkeit von Keton-Aldehyd-Harzen und ihren Metallverbindungen an thermobehandelten Süsswasser-Bohrspülungen

| Produkt nach Beispiel | Zusatzmittel | Dosierung (%) | Thermo-behandlung | Rheologische Eigenschaften der Spülung | | | |
| --- | --- | --- | --- | --- | --- | --- | --- |
| | | | | Scheinbare Viskosität (rel.-%) | Fliess-grenze (rel.-%) | Anfangs-Gelstärke (rel.-%) | 10 Min.-Gelstärke (rel.-%) |
| A.3. | Harz | 3,0 | 204°C/24 h | 100 | 100 | 100 | 100 |
| A.3. | Metallverbindung | 3,0 | 204°C/24 h | 63 | 54 | 41 | 40 |
| A.5. | Harz | 3,0 | 204°C/24 h | 100 | 100 | 100 | 100 |
| A.5. | Metallverbindung | 3,0 | 204°C/24 h | 59 | 85 | 100 | 21 |

Beispiel B.10.

Das Beispiel beschreibt die Thermostabilität erfindungsgemässer Dispergiermittel auf der Basis von Metallverbindungen in bei 177°C gealterten Salzwasser-Tonspülungen.

Jeweils 350 Gew.-Teile der Salzwasser-Grundspülungen von Beispiel B.8. werden mit 10,5 Gew.-Teilen der pulverförmigen Metallverbindungen nach den Beispielen A.1. bis A.3. versetzt, 5 Minuten am Hamilton Beach Mixer bei Stufe «high» vermischt und anschliessend nach der in Beispiel B.9. beschriebenen Weise einem 24stündigen Alterungstest unterworfen, wobei die Temperatur im Rollerofen 177°C (350°F) beträgt.

Die Ergebnisse von Tab. IX zeigen, dass Metallverbindungen auf der Basis von Keton-Aldehyd-Harzen auch in temperaturbehandelten Salzspülungen wirksame Viskositätserniedriger sind.

Tabelle 9

Viskositätserniedrigung von bei 177°C gealterten Salzwasser-Tonspülungen durch Metallverbindungen

| Salzwasser-Tonspülung auf Basis | Metallverbindung nach Beispiel | Scheinbare Viskosität (rel.-%) | Fliessgrenze (rel.-%) | Anfangs-Gelstärke (rel.-%) | 10 Min.-Gelstärke (rel.-%) |
| --- | --- | --- | --- | --- | --- |
| Meerwasser | Nullversuch | 100 | 100 | 100 | 100 |
| Meerwasser | A.1. | 33 | 27 | 30 | 36 |
| Meerwasser | A.2. | 14 | 3 | 10 | 9 |
| Meerwasser | A.3. | 19 | 3 | 20 | 27 |
| gesättigte KCl-Lösung | Nullversuch | 100 | 100 | 100 | 100 |
| gesättigte KCl-Lösung | A.1. | 22 | 3 | 14 | 22 |
| gesättigte KCl-Lösung | A.2. | 22 | 3 | 7 | 22 |
| gesättigte KCl-Lösung | A.3. | 14 | 3 | 7 | 22 |

Beispiel B.11.

Metallverbindungen auf Keton-Aldehyd-Basis eignen sich zur Verflüssigung von Invertemulsionsspülungen besser als entsprechende Verbindungen auf Lignosulfonat-Basis. Dies wird durch folgende Versuche verdeutlicht:

Man bereitet zunächst eine Ausgangsspülung durch 5minütiges Verrühren am Hamilton Beach Mixer von 227,5 Gew.-Teilen Dieselöl mit 122,5 Gew.-Teilen der Süsswasser-Grundspülung von Beispiel B.6. Anschliessend bestimmt man nach der vom American Petroleum Institute (API) empfohlenen Prüfrichtlinie RP 134 B («Recommended practice for Standard Procedure for Testing Drilling Fluids», 9. Ausabe Mai 1982), die rheologischen Eigenschaften dieser Wasser-in-Öl-Emulsion.

Zur Prüfung der Wirksamkeit erfindungsgemässer Metallverbindungen mischt man jeweils 350 Gew.-Teile der obigen Ausgangsspülung mit 1,75 Gew.Teilen an folgenden Zusatzmitteln an: Aceton-Formaldehyd-Harz nach Beispiel A.3., Eisenchromverbindung nach Beispiel A.3. sowie ein handelsübliches Eisenchromlignosulfonat. Die Spülungen werden in zwei Versuchsreihen bei 20 und 80°C hergestellt und bei diesen Temperaturen am FANN-Gerät mit Thermocup vermessen.

Die Versuchsergebnisse von Tabelle X zeigen, dass die Eisenchromverbindung auf Aceton-Formaldehyd-Basis zur Verbesesrung der rheologischen Eigenschaften einer Bohrspülung wesentlich besser geeignet ist als die Eisenchromverbindung von Lignosulfonat oder das Eisenchromfreie Aceton-Formaldehyd-Ausgangsharz. Dieser Befund gilt auch für die Wirkung bei erhöhter Temperatur, beispielsweise 80°C.

Tabelle 10

Rheologische Daten einer Invertemulsionsspülung mit Zusatzmitteln bei + 20°C und + 80°C

| Zusatzmittel | Spülungstemperatur | Plastische Viskosität | Rheologische Fliessgrenze | Daten der Invertemulsionsspülung Gelstärke in 0,4788 Pa (I bs/100 ft²) | |
|---|---|---|---|---|---|
| | (°C) | (mPa.s) | (I bs/100 ft²) | Anfangs-Wert | 10 Min.-Wert |
| Nullversuch | 20 | 62 | 83 | 30 | 39 |
| Harz nach A.3. | 20 | 57 | 48 | 29 | 30 |
| Eisenchromverbindung nach A.3. | 20 | 26 | 21 | 3 | 10 |
| Eisenchromlignosulfonat | 20 | 54 | 52 | 8 | 21 |
| Nullversuch | 80 | 54 | 101 | 32 | 35 |
| Harz nach A.3. | 80 | 42 | 78 | 32 | 35 |
| Eisenchromverbindung nach A.3. | 80 | 15 | 14 | 6 | 11 |
| Eisenchromlignosulfonat | 80 | 28 | 15 | 14 | 20 |

Beispiel B.12.

Die Retention des zum Anmachen einer Mörtel- oder Betonmischung verwendeten Wassers ist ein in der Bauindustrie häufiges Problem. Beim Unterwasserbetonieren beispielsweise wird der Beton im freien Fall unter Wasser in die Schalung eingebracht, wobei nach Möglichkeit kein Auswaschen und Zerfallen des Betons eintreten darf, da sonst die erforderlichen hohen Festigkeiten nicht erreicht werden und die durch ausgeschwemmte Teilchen bedingte Trübung des Wassers die Betonierarbeiten erschwert. Diese ungünstigen Effekte lassen sich allgemein durch Zugabe von Retentionsmitteln zur Beton- oder Mörtelmischung beseitigen.

Die folgenden Versuche zeigen, dass erfindungsgemässe Metallverbindungen die für Problemstellungen wie Unterwasserbetonieren geforderte Retentionswirkung besitzen:

100 Gew.-Teile einer homogenen Trockenmischung aus 450 Gew.-Teilen Portlandzement der Festigkeitsklasse Z 45 F entsprechend der deutschen Norm DIN 1164 und 1.350 Gew.-Teile Sand, ebenfalls nach DIN 1164, werden mit der Wassermenge, die notwendig ist, um später aus dem Mörtel eine kompakte Kugel mit gutem Zusammenhaltevermögen zu erhalten, 1 Minute lang in einer Porzellankasserole innig verrührt, anschliessend 10 Minuten belassen und dann erneut 1 Minute intensiv aufgerührt. Aus dem so erhaltenen Mörtel formt man eine Kugel, bestimmt ihr Gewicht und lässt sie in einem 1 l-Messzylinder, welcher mit Leitungswasser bis zur 1 l-Marke gefüllt ist und in der Höhe und im Durchmesser 33 cm bzw. 6 cm misst, durch das Wasser auf den Boden des Messzylinders fallen. Dann stürzt man das Gefäss auf den Kopf, lässt die Kugel zu der mit einer Hand verschlossenen Öffnung des Messzylinders zurückfallen und nimmt sie heraus. Durch Wiegen der Kugel stellt man den Gewichtsverlust im Vergleich zur Kugel vor dem Fallversuch im Wasser fest.

Ein Mörtel mit gutem Waserrückhaltevermögen zeigt minimalen Gewichtsverlust durch Ausschwemmung oder Wasserabgabe. Ausserdem bleibt das Wasser im Messzylinder während des Kugelfalls weitgehend klar.

Zur Prüfung der Wirkung erfindungsgemässer Zusatzmittel werden nach der beschriebenen Methode Mörtel hergestellt, bei denen jeweils 0,375 Gew.-Teile der pulverförmigen Additive nach den Beispielen A.8. und A.9. im Anmachwasser gelöst waren und führt mit den hieraus erhaltenen Mörtelkugeln den Fallversuch im 1 l-Messzylinder durch.

Die Ergebnisse von Tabelle XI zeigen, dass mit Metallverbindungen nach den Beispielen A.8. und A.9. Mörtel mit gutem Waserrückhaltevermögen erzielt werden können.

Tabelle 11

Wasserrückhaltevermögen von Mörtel mit Zusatz an Metallverbindungen beim Fallversuch in Wasser

| Zusatzmittel nach Beispiel | Wassermenge zur Herstellung einer kompakten Kugel (Gew.-Teile) | Gewichtsverlust der Mörtelkugel beim Fallversuch (%, bezogen auf Ausgangsgewicht) | Mörtelkugel nach Fallversuch | Trübung des Wassers nach Fallversuch |
|---|---|---|---|---|
| Nullversuch | 13 | 30 | zerfallen | sehr stark |
| A.8. | 11 | 4 | kompakt | gering |
| A.9. | 13 | 3 | kompakt | keine |

Beispiel B.13.

Nach den Beispielen A.8. und A.9. hergestellte Metallverbindungen ermöglichen auch die Bereitung von Mörteln oder Zementleimen mit hohem Wasserrückhaltevermögen, wie sie z.B. für Mauerputze oder Dichtmassen eingesetzt werden.

Dies soll durch versuchsweise Verklebung von Gasbetonwürfeln mit Zementleim, dem erfindungsgemässe Metallverbindungen zugefügt sind, gezeigt werden:

Man bereitet zunächst durch inniges, 1 Minute dauerndes Verrühren von 100 Gew.-Teilen Portlandzement der Festigkeitsklasse 35 F nach DIN 1164 sowie 36 Gew.-Teilen Wasser einen Zementleim und trägt diesen auf der Seitenfläche eines Gasbetonwürfels mit einer Kantenlänge von 4 cm und einem spezifischen Gewicht von 0,60 g/cm³ gleichmässig auf. Anschliessend drückt man einen weiteren Gasbetonwürfel mit seiner Seitenfläche auf den Zementleim und lässt 24 Stunden stehen. Nach dieser Zeit wird geprüft, ob die Verklebung der beiden Gasbetonwürfel durch den Zementleim fest ist oder ob beim Drücken Bruch in der Fuge eintritt.

Zementleime mit guter Wasserretention geben kein Wasser an den saugfähigen Gasbeton ab und zeigen daher eine feste Verklebung.

Führt man den oben beschriebenen Versuch ohne Zusatzmittel zum Zementleim durch, dann können beide Gasbetonwürfel durch leichten Druck getrennt werden. Die Verklebung hält nicht, weil das Wasser aus dem Zementleim in den porösen Gasbeton-Haftgrund gesaugt wurde und der Zement nicht mehr vollständig abbinden konnte. Bei Zusatz von 1,0 Gew.-%, bezogen auf die Zementmenge im Zementleim, der pulverförmigen Metallverbindungen nach den Beispielen A.8. oder A.9. hingegen bricht die Verklebung auch bei starkem Druck nicht, da das Wasser im Zementleim verblieben ist.

Beispiel B.14.

Das folgende Beispiel demonstriert, wie aus einer Metallverbindung mit Dispergiereigenschaften durch weitere Umsetzung mit einem höherwertigen Metallion, beispielsweise sechswertigem Chrom, zusätzliche Retentionseigenschaften erzielt werden können:

Nach dem in Beispiel B.5. beschriebenen Verfahren bereitet man Zementschlämmen aus einem Tiefbohrzement der API-Klasse G mit einem Wasser-Zement-Faktor von 0,44 und misst die Schlämmenviskositäten an einem Fann-Viskosimeter (Modell 35 SA, Rotor-Bob R1B1). Anschliessend breitet man dieselben Zementschlämmen erneut und führt eine Bestimmung des Presswasserverlustes der Zementschlämmen entsprechend den Prüfrichtlinien der API-Specification 10, Ausgabe Januar 1982, bei einer Temperatur von 38°C und einem Druck von 6894 kPa (1000 psi) durch.

Diese Prüfungen werden zunächst mit einer Zementschlämme ohne Zusatzmittel als Nullversuch und anschliessend mit jeweils 1,5 Gew.-Prozent der pulverförmigen Eisen- bzw. Eisenchromverbindung nach Beispiel A.3. und mit einer handelsüblichen Eisenchromverbindung auf Lignosulfonat-Basis als Zusatzmittel durchgeführt. Bei den Tests werden die Zusatzmittel trocken in den Zement eingemischt.

Die Resultate von Tabelle XII demonstrieren, dass die Eisenverbindung nach Beispiel A.3. zwar die Zementschlämme sehr gut dispergiert, jedoch beim Fluid loss-Versuch keine ausreichende Filtrat-vermindernde Wirkung aufweist. Die mit der Eisenverbindung hergestellte Eisenchromverbindung besitzt gleichzeitig sehr gute Dispergier- und Filtratkontrolleigenschaften. Eine als Vergleichsprodukt getestete handelsübliche Eisenchrom-Ligno-Sulfonat-Verbindung hingegen weist nur mässige Dispergier- und Filtratkontrolleigenwirkung auf.

## Tabelle 12

Dispergier- und Filtratkontrollwirkung von Metallverbindungen an Tiefbohrzementschlämmen

| Zusatzmittel | Scheinbare Viskosität der Zementschlämme (mPa.s) | API-Filtrat bei 6894 kPa (1000 psi) Druck in 30 Minuten (ml) |
|---|---|---|
| Nullversuch | 58,5 | 1559* |
| Eisenverbindung nach Beispiel A.3. | 26 | 254 |
| Eisenchromverbindung nach Beispiel A.3. | 24 | 28 |
| Eisenchromlignosulfonat | 38 | 508* |

\* Berechnete Filtratwerte, da vollständiger Wasserverlust vor dem Ende des 30minütigen Filtrations-Versuch eintrat.

Beispiel B.15.

Erfindungsgemässe Metallverbindungen wirken an Süsswasser-Ton-Spülungen als hervorragende Wasserretentionsmittel, auch nach Alterung der Spülungen im Temperaturbereich bis nahezu 300°C. Dies wird durch folgende Versuche mit einer Spülung vom Bohrturm einer süddeutschen Lokation belegt:

Bei einer Erdgasbohrung im Aquitan wurde in 2600 Meter Tiefe eine Süsswasser-Spülung aus örtlichem Brunnenwasser mit einem Calciumgehalt von 30°dH und 5 Gew.-% eines Süsswasser-Tons entsprechend der OCMA-Spezifikation DFCP-4 verwendet. Die Spülung enthielt durch Laugenzufluss 0,3 Gew.-Prozent an Natriumchlorid. Zur Filtratkontrolle waren 2,0 Gew.-% einer niedrigviskosen, weitgehend Natriumchloridfreien Carboxymethylcellulose eingesetzt. Bei 115°C BHST (Bottom Hole Static Temperature, d. h. die unter statischen Bedingungen gemessene Bohrlochsolentemperatur) zeigte die Spülung trotz Biozidzugabe ein starkes Nachlassen der Presswasserwerte, welche auch durch drastisch erhöhte CMC-Zugabe nicht zu verbessern waren.

Die Filtratkontrolle dieser Spülung ist mit der Metallverbindung nach Beispiel A.7. wie folgt möglich:

Jeweils 450 Gew.-Teile der obigen, CMC-haltigen Bohrspülung werden mit 13,5 Gew.-Teilen an pulverförmiger Metallverbindung nach A.7. 20 Minuten am Hamilton Beach Mixer bei Stufe «high» vermischt, in eine 500 ml-Alterungszelle gefüllt und nach der in Beispiel B.9. beschriebenen Weise 24stündigen Alterungsversuchen bei 120, 177 und 300°C unterzogen. Anschliessend wird an den auf Raumtemperatur abgekühlten Spülungen eine Presswasserbestimmung nach API RP 13 B bei 689,4 kPa (100 psi) Druck durchgeführt.

Die Ergebnisse von Tab. XIII zeigen, dass erfindungsgemässe Metallverbindung nach Beispiel A.7. zur Fitlratkontrolle in Süsswasser-Spülungen bis 300°C dienen kann.

Beispiel B.16.

Die Eignung der Eisenchrom-Verbindung von Beispiel A.3. zur Filtratkontrolle einer Salzwasser-Ton-Spülung wird im folgenden erläutert:

Jeweils 350 Gew.-Teile der im Beispiel B.8. beschriebenen Meerwasser- und Kaliumchlorid-Spülung mit Attapulgit als Tonmineral werden mit 1,5 Gew.-Prozent des Additivs nach Beispiel A.3. versetzt, 5 Minuten bei Stufe «high» am Hamilton Beach Mixer vermischt und anschliessend bei 689,4 kPa (100 psi) Druck und Raumtemperatur auf ihren Filtratwert nach 30 Minuten entsprechend API RP 13 B geprüft. Die erhaltenen Filtratwerte werden mit dem Presswasser der Ausgangsspülungen ohne Zusatzmittel verglichen.

Zur Prüfung auf Wirksamkeit bei thermobehandelten Spülungen mischt man obige Spülungen mit 3,0 Gew.-Prozent des Additivs nach Beispiel A.3. an und führt eine 24stündige Alterung der Spülungen bei 177°C im Rollerofen durch (Methode siehe Beispiel B.9.).

Die Resultate von Tab. XIV verdeutlichen die Eignung eines erfindungsgemässen Zusatzmittels zur Filtratkontrolle in Salzwasser-Ton-Spülungen bis mindestens 177°C.

## Tabelle 13

Filtratkontroll-Wirkung der Metallverbindung nach Beispiel A.7. an gealterter Süsswasser-Spülung einer süddeutschen Erdölbohrung

| Zusatz zur Bohrspülung | Alterungsbedingungen der Spülung | Presswasserwert (rel.-%) nach 30 Minuten |
|---|---|---|
| Nullversuch | 120°C/24 Stunden | 100 |
| A.7. | 120°C/24 Stunden | 50 |
| Nullversuch | 177°C/24 Stunden | 100 |
| A.7. | 177°C/24 Stunden | 42 |
| Nullversuch | 300°C/24 Stunden | 100 |
| A.7. | 300°C/24 Stunden | 12 |

Tabelle 14

Filtratkontrolle an Salzwasser-Ton-Spülung durch Zusatz der Metallverbindung nach Beispiel A.3.

| Spülung auf Basis | Zusatz an A.3. (Gew.-%) | Alterung der Spülung | API-Filtrat bei 689,4 kPa (100 psi) in 30 Min. (rel.-%) |
|---|---|---|---|
| Meerwasser | — | — | 100 |
| Meerwasser | 1,5* | — | 7 |
| Meerwasser | — | 177°C/24 h | 100 |
| Meerwasser | 3,0* | 177°C/24 h | 14 |
| gesättigte KCl-Lösung | — | — | 100 |
| gesättigte KCl-Lösung | 1,5* | — | 14 |
| gesättigte KCl-Lösung | — | 177°C/24 h | 100 |
| gesättigte KCl-Lösung | 3,0* | 177°C/24 h | 37 |

* Diese Spülungen wurden zur Einstellung eines geeigneten pH-Wertes mit zusätzlich 1,75 Gew.-Teilen 50%iger Natronlauge angemischt.

Beispiel B.17.

Die Wirkung erfindungsgemässer Metallverbindungen als Verdickungsmittel ist in folgenden Versuchen belegt:

Die Lösungen der Ausgangsharze und Metallverbindungen nach den Beispielen A.8. und A.9. werden auf einen Feststoffgehalt von 3,0 Gew.-Prozent abgedünnt, auf 20°C thermostatisiert und anschliessend ihre Viskosität an einem Ubbelohde-Viskosimeter bestimmt.

Die Versuchsergebnisse von Tab. XV zeigen, dass durch Überführung der Keton-Aldehyd-Ausgangsharze nach den Beispielen A.8. und A.9. in Metallverbindungen beträchtliche Steigerungen der Viskositäten erzielt werden.

Beispiel B.18.

Das Beispiel demonstriert die Verdickungswirkung der Metallverbindung von Beispiel A.9. auch nach Temperatur- und Scherbehandlung oder pH-Wert-Umstellung der Lösung.

a) Temperaturbehandlung

Von einer 3,0%igen Lösung der Metallverbindung nach Beispiel A.9. wird die Ubbelohde-Viskosität bei 20°C bestimmt.

Anschliessend lagert man die Lösung in einem dicht verschlossenen Gefäss 24 Stunden bei 80°C, kühlt auf 20°C ab und misst die Viskosität erneut.

Ein Vergleich der Viskositätswerte vor und nach der Temperaturbehandlung in Tabelle XVI zeigt, dass das Verdickungsmittel keinen Wirkungsverlust erlitt.

Tabelle 15

Viskosität wässriger Lösungen der Keton-Aldehyd-Harze und Metallverbindungen nach den Beispielen A.8. und A.9.

| Verdickungsmittel | Ubbelohde-Viskosität bei 20°C (rel.-%) |
|---|---|
| Keton-Aldehyd-Harz nach Beispiel A.8. | 100 |
| Metallverbindung nach Beispiel A.8. | 258 |
| Keton-Aldehyd-Harz nach Beispiel A.9. | 100 |
| Metallverbindung nach Beispiel A.9. | 223 |

b) Scherbehandlung

100 Gew.-Teile der 3,0%igen Lösung der Metallverbindung nach Beispiel A.9. werden 5 Minuten lang im 250 ml-Becher eines Waring-Mischgerätes gemäss API-Specification 10, Ausgabe Januar 1982, Abschnitt 5 («Preparation of Slurry»), bei einer Rührgeschwindigkeit von 8000 Umdrehungen pro Minute gemischt und anschliessend die Viskosität bei 20°C gemessen.

Ein Vergleich der Viskositäten von Ausgangslösung und scherbehandelter Lösung in Tabelle XVI unterstreicht die Scherstabilität des erfindungsgemässen Verdickungsmittels.

c) Viskosität in Abhängigkeit vom pH-Wert Jeweils 100 Gew.-Teile der 3,0%igen Lösung der Metallverbindung nach Beispiel A.9. werden mit Schwefelsäure bzw. Natronlauge auf die pH-Werte 2, 4, 10 und 13 eingestellt und anschliessend ihre Viskositäten nach Ubbelohde bei 20°C gemessen.

Ein Vergleich der gemessenen Viskositätswerte mit denjenigen der auf pH = 7 eingestellten Stammlösung in Tabelle XVI zeigt, dass die Verdickungswirkung der erfindungsgemässen Metallverbindung im pH-Wert-Bereich von stark sauer bis stark alkalisch konstant ist.

Beispiel B.19.

Das erfindungsgemässe Verdickungsmittel nach Beispiel A.9. eignet sich auch zur Viskositätserhöhung von Tonsuspensionen, beispielsweise in sogenannten low solid non dispersed muds.

Man bereitet nach den in den Beispielen B.6. und B.8. geschilderten Verfahrensweisen zwei Grundspülungen, welche 4 Gew.-Prozent Bentonit in Süsswaser beziehungsweise 4 Gew.-Prozent Attapulgit (SWDC) in Meerwasser enthalten und bestimmt, mit dem FANN-Gerät scheinbare Viskosität und Fliessgrenze dieser Spülungen.

Tabelle 16

Viskosität einer wässrigen Lösung der Metallverbindung von Beispiel A.9. nach Temperatur-, Scherbehandlung und pH-Wert-Einstellung

| Behandlung der Lösung mit Verdickungsmittel nach Beispiel A.9. | Ubbelohde-Viskosität bei 20 °C (rel.-%) |
|---|---|
| Ausgangslösung | 100 |
| 24 Std. Lagerung bei 80 °C | 101 |
| 5 Minuten bei 8000 UpM im Waring Blendor geschert | 101 |
| auf pH = 2 eingestellt | 100 |
| auf pH = 4 eingestellt | 100 |
| auf pH = 10 eingestellt | 99 |
| auf pH = 13 eingestellt | 100 |

Anschliessend mischt man zu jeweils 350 Gew.-Teilen der beiden Grundspülungen 7 Gew.-Teile des pulverförmigen Additivs nach Beispiel A.9. 20 Minuten am Hamilton Beach Mixer bei Stufe «high» ein und bestimmt die Rheologie der Spülungen mit Verdickungsmittel wie bei den beiden Grundspülungen ohne Zusatz.

Die in Tab. XVII zusammengefassten Ergebnisse verdeutlichen die Viskositätssteigerungen, welche an den feststoffarmen Süss- bzw. Salzwasser-Spülungen mit dem Verdickungsmittel nach Beispiel A.9. erzielbar sind.

Beispiel B.20.

Die Eignung einer oberflächenaktiven Metallverbindung zur gezielten Luftporeneinführung in Mörtel lässt sich wie folgt zeigen:

Gemäss der deutschen Norm DIN 1164 bereitet man einen Normenmörtel aus Portlandzement der Festigkeitsklasse 35 F, Normensand und Leitungswasser, wobei für den Anmischprozess das Mischprogramm RILEM-CEM entsprechend einer Vorschrift des Cembureaus, Paris, benutzt wird, und bestimmt den Luftporengehalt des auf ein Ausbreitmass von 18 cm eingestellten Mörtels nach DIN 1164 in Volumen-Prozent.

Zur Prüfung der luftporeneinführenden Wirkung eines erfindungsgemässen Zusatzmittels bereitet man Normenmörtel mit 0,01, 0,02 und 0,05 Gew.-Prozent Zusatz, bezogen auf die Zementmenge im Mörtel, an pulverförmiger Metallverbindung nach Beispiel A.10. und bestimmt den Luftporengehalt der wie beim Nullversuch auf ein Ausbreitmass von 18 cm eingestellten Mörtel. Das Zusatzmittel wird vor dem Anmischen des Mörtels vollständig im Anmachwasser gelöst.

Die Versuchsergebnisse von Tab. XVIII belegen, dass mit sehr geringen Dosierungen an erfindungsgemässer oberflächenaktiver Metallverbindung hohe Luftporengehalte in Baustoffmischungen wie z. B. Mörtel eingeführt werden können.

Tabelle 17

Viskositätssteigerung an Süss- und Salzwasser-Bohrspülungen durch Zusatz des Verdickungsmittels nach Beispiel A.9.

| Spülungstyp | Zusatzmittel | Rheologische Eigenschaften d. Spülungen Scheinbare Viskosität (rel.-%) | Fliessgrenze (rel.-%) |
|---|---|---|---|
| Süsswasser-Bentonit | — | 100 | 100 |
| Süsswasser-Bentonit | Metallverbindung nach A.9. | 168 | 168 |
| Meerwasser-SWDC | — | 100 | 100 |
| Meerwasser-SWDC | Metallverbindung nach A.9. | 136 | 141 |

Tabelle 18

Luftporeneinführung der oberflächenaktiven Metallverbindung nach Beispiel A. 10. in Normenmörtel

| Zusatz an Metallverbindung nach Beispiel A.10. (Gew.-%) | Luftporengehalt im Normenmörtel (Vol.-%) |
|---|---|
| Nullversuch | 5,4 |
| 0,01 | 13,8 |
| 0,02 | 20,5 |
| 0,05 | 30,0 |

Beispiel B.21.

Das Beispiel beschreibt die Herstellung von Schaumbeton mit einer erfindungsgemässen oberflächenaktiven Metallverbindung.

Eine 1%ige Lösung der Metallverbindung nach Beispiel A.11. wird mittels eines handelsüblichen Schaumaggregates zu einem Schaum der mittleren Dichte 0,1 g/cm³ verschäumt und in eine Mischung aus 300 kg Portlandzement 45 F, 600 kg Feinsand (Korngrösse 0 bis 1 mm) sowie 120 kg Wasser eingerührt. Der so erzeugte Schaumbeton weist eine Frischrohdichte von 0,92 g/cm³ auf.

Beispiel B.22.

Der Einsatz einer grenzflächenaktiven Metallverbindung zur Emulgierung von Öl/Wasser-Gemischen wird in folgendem Versuch erläutert:

In fünf 250 ml-Glasflaschen üerschichtet man jeweils 50 Gew.-Teile einer 1%igen wässrigen Abdünnung der oberflächenaktiven Metallverbindung nach Beispiel A.12. mit folgenden Komponenten:

a) 50 Gew.-Teile eines Paraffin-basischen Öles
b) 50 Gew.-Teile eines Naphthen-basischen Öles
c) 50 Gew.-Teile eines aromatischen Öles
d) 25 Gew.-Teile Hexanol und 50 Gew.-Teile Paraffin-basisches Öl
e) 25 Gew.-Teile Isopropanol und 50 Gew.-Teile aromatisches Öl

Die Wasser/Öl- bzw. Wasser/Alkohol/Öl-Gemische werden per Hand 20 Sekunden lang kräftig geschüttelt, wobei Mirkoemulsionen entstehen. Anschliessend lässt man die Flaschen ruhig stehen und misst die Zeit, bis zu welcher die Ölphase wieder von der Wasserphase getrennt ist.

Die Ergebnisse nach Tab. XIX verdeutlichen, dass Wasser/Öl bzw. Wasser/Alkohol/Öl-Gemische durch Zusatz an erfindungsgemässen oberflächenaktiven Mitteln in stabile Mikroemulsionen überführt werden können. Die Emulgatorwirkung ist dabei in Gegenwart eines Co-Tensids wie z.B. Alkoholen besonders günstig.

Tabelle 19

Stabilität von Wasser/Öl- bzw. Wasser/Alkohol/Öl-Emulsionen bei Zusatz der Metallverbindung nach Beispiel A.12.

| Emulsionen aus | Stabilität der Mikro-emulsionen (h : min) |
|---|---|
| Wasser-Paraffin-ÖL | 0 : 45 |
| Wasser/Hexanol/Paräffin-Öl | > 24 h |
| Wasser/Naphthen-Öl | 0 : 45 |
| Wasser/Isopropanol/aromat. Öl | > 24 h |

**Patentansprüche für die Vertragsstaaten BE, CH, DE, FR, GB, IT, LI, NL, SE**

1. Metallverbindungen von Säuregruppen enthaltenden Kondensationsprodukten oder Co-Kondensationsprodukten von Ketonen, die symmetrische oder unsymmetrische Ketone, in denen mindestens ein Rest ein nichtaromatischer Rest ist, und/oder Cycloalkanone sind, und Aldehyden, erhältlich durch Umsetzung von Säuregruppen enthaltenden Keton-Aldehyd-Kondensationsprodukten und/oder Co-Kondensationsprodukten mit ein- oder mehrwertigen Metallverbindungen und/oder Metallkomplexverbindungen von Metallen der Gruppen III A bis VIII A und/oder I B bis V B des Periodensystems.

2. Metallverbindungen nach Anspruch 1, dadurch gekennzeichnet, dass man die ein- oder mehrwertigen Metallverbindungen und/oder Metallkomplexverbindungen den fertigen Kondensationsprodukten oder Co-Kondensationsprodukten von Ketonen und Aldehyden oder in einer Verfahrensstufe der Herstellung der Kondensationsprodukte oder Co-Kondensationsprodukte zugibt.

3. Metallverbindungen nach Anspruch 1 oder 2, dadurch gekennzeichnet, dass die Keton-Aldehyd-Co-Kondensationsprodukte Co-Kondensate von Ketonen und Aldehyden mit Säuregruppen einführenden Verbindungen und mit Aminoplastbildnern und/oder aromatischen Verbindungen und/oder deren Kondensationsprodukten und/oder mit Ligninsulfonatharzen und/oder mit Cellulosederivaten sind.

4. Metallverbindungen nach einem der Ansprüche 1 bis 3, dadurch gekennzeichnet, dass sie als Säuregruppen Carboxy-, Phosphono-, Sulfino-, Sulfo- Sulfamido-, Sulfoxy-, Sulfoalkyloxy-, Sulfinoalkyloxy- und/oder Phosphonooxygruppen enthalten.

5. Metallverbindungen nach einem der vorhergehenden Ansprüche, dadurch gekennzeichnet, dass sie als Ketone symmetrische oder unsymmetrische Ketone mit cyclischen oder acyclischen aliphatischen, araliphatischen und/oder aromatischen Resten, wobei aber mindestens ein Rest ein nichtaromatischer Rest ist, enthalten.

6. Metallverbindungen nach einem der vorhergehenden Ansprüche, dadurch gekennzeichnet, dass in den Kondensationsprodukten das Molverhältnis Ketone/Aldehyde/Säuregruppen 1/1–18/0,02–3 ist, und in den Co-Kondensationsprodukten der Anteil an Aminoplastbildnern und/oder aromatischen Verbindungen bzw. deren Kondensationsprodukten und/oder Ligninsulfonatharzen und/oder Cellulosederivaten 2 bis 50 Gew.-%, insbesondere 10 bis 40 Gew.-%, bezogen auf das fertige Kondensationsprodukt, beträgt.

7. Metallverbindungen nach einem der vorhergehenden Ansprüche, dadurch gekennzeichnet, dass als Metallkomplexverbindungen neutrale oder geladene Komplexverbindungen von Metallen der Gruppen III A bis VIII A und/oder der Gruppen I B bis V B eingesetzt werden.

8. Metallverbindungen nach einem der vorhergehenden Ansprüche, dadurch gekennzeichnet, dass der Anteil an Metall in der Metallverbindung < 70 Gew.-%, insbesondere 0,1 bis 20 Gew.-%, beträgt.

9. Verfahren zur Herstellung von Metallverbindungen nach einem der Ansprüche 1 bis 8, dadurch gekennzeichnet, dass man Säuregruppen enthaltende Keton-Aldehyd-Kondensationsprodukte und/oder Co-Kondensationsprodukte mit ein- bis mehrwertigen Metallverbindungen und/oder Metallkomplexverbindungen von Metallen der Gruppen III A bis VIII A und/oder der Gruppen I B bis V B umsetzt.

10. Verfahren nach Anspruch 9, dadurch gekennzeichnet, dass man die Kondensationsprodukte und/oder Co-Kondensationsprodukte mit den Metallverbindungen und/oder Metallkomplexverbindungen im Gewichtsverhältnis Kondensationsprodukt und/oder Co-Kondensationsprodukt/Metall der Metallverbindungen und/oder Metallkomplexverbindungen von 100/70, insbesondere 100/0,1 bis 20 umsetzt.

11. Verfahren nach Anspruch 9 oder 10, dadurch gekennzeichnet, dass man als Metallkomplexverbindungen neutrale oder geladene Komplexverbindungen von Metallen der Gruppen III A bis VIII A und/oder der Gruppen I B bis V B einsetzt.

12. Verfahren nach einem der Ansprüche 9 bis 11, dadurch gekennzeichnet, dass man die Umsetzung bei einer Temperatur von 10 bis 250 °C, insbesondere von 20 bis 100 °C, durchführt.

13. Verfahren nach einem der Ansprüche 9 bis 12, dadurch gekennzeichnet, dass man die Umsetzung mit den Metallverbindungen oder Metallkomplexverbindungen in dem bei der Herstellung der Kondensationsprodukte oder Co-Kondensationsprodukte erhaltenen Reaktionsgemisch ohne vorherige Isolierung der Kondensations- oder Co-Kondensationsprodukte durchführt.

14. Verfahren nach einem der Ansprüche 9 bis 13, dadurch gekennzeichnet, dass man das Metall als Salz oder Komplexsalz einer anorganischen oder organischen Säure, als Oxid oder Hydroxid einsetzt, oder, bei zur Bildung einer Metallverbindung oder Metallkomplexverbindung in situ geeigneten pH-Werten, auch in elementarer Form.

15. Verfahren nach einem der Ansprüche 9 bis 14, dadurch gekennzeichnet, dass man die Metallverbindung oder Metallkomplexverbindung in einer Verfahrensstufe der Herstellung der Kondensationsprodukte oder Co-Kondensationsprodukte zugibt.

16. Verfahren nach Anspruch 15, dadurch gekennzeichnet, dass man die Metallverbindung oder Metallkomplexverbindung einem Reaktionspartner oder einem Gemisch aus zwei oder mehreren Reaktionspartnern vor der Zugabe des oder der restlichen Reaktionspartner zugibt.

17. Verwendung der Metallverbindungen nach einem der Ansprüche 1 bis 8 als Verdickungsmittel, Retentionsmittel, oberflächenaktives Mittel, Emulgiermittel, Dispergiermittel und/oder Verflüssigungsmittel, insbesondere für Wasser enthaltende Systeme.

**Patentansprüche für den Vertragsstaat AT**

1. Verfahren zur Herstellung von Metallverbindungen von Säuregruppen enthaltenden Kondensationsprodukten oder Co-Kondensationsprodukten von Ketonen, die symmetrische oder unsymmetrische Ketone, in denen mindestens ein Rest ein nichtaromatischer Rest ist, und/oder Cycloalkanone sind, und Aldehyden, dadurch gekennzeichnet, dass man Säuregruppen enthaltende Keton-Aldehyd-Kondensationsprodukte und/oder Co-Kondensationsprodukte mit ein- oder mehrwertigen Metallverbindungen und/oder Metallkomplexverbindungen von Metallen der Gruppen III A bis VIII A und/oder I B bis V B des Periodensystems umsetzt.

2. Verfahren nach Anspruch 1, dadurch gekennzeichnet, dass man die ein- oder mehrwertigen Metallverbindungen und/oder Metallkomplexverbindungen den fertigen Kondensationsprodukten oder Co-Kondensationsprodukten von Ketonen und Aldehyden oder in einer Verfahrensstufe der Herstellung der Kondensationsprodukte oder Co-Kondensationsprodukte zugibt.

3. Verfahren nach Anspruch 1 oder 2, dadurch gekennzeichnet, dass man als Keton-Aldehyd-Co-Kondensationsprodukte Co-Kondensate von Ketonen und Aldehyden mit Säuregruppen einführenden Verbindungen und mit Aminoplastbildnern und/oder aromatischen Verbindungen und/oder deren Kondensationsprodukten und/oder mit Ligninsulfonatharzen und/oder mit Cellulosederivaten einsetzt.

4. Verfahren nach einem der Ansprüche 1 bis 3, dadurch gekennzeichnet, dass die Säuregruppen Carboxy-, Phosphono-, Sulfino-, Sulfo- Sulfamido-, Sulfoxy-, Sulfoalkyloxy-, Sulfinoalkyloxy- und/oder Phosphonooxygruppen sind.

5. Verfahren nach einem der vorhergehenden Ansprüche, dadurch gekennzeichnet, dass die Kondensationsprodukte oder Co-Kondensationsprodukte als Ketone symmetrische oder unsymmetrische Ketone mit cyclischen oder acyclischen aliphatischen, araliphatischen und/oder aromatischen Resten, wobei aber mindestens ein Rest ein nichtaromatischer Rest ist, enthalten.

6. Verfahren nach einem der vorhergehenden Ansprüche, dadurch gekennzeichnet, dass man Kondensationsprodukte einsetzt, in denen das Molverhältnis Ketone/Aldehyde/Säuregruppen 1/1–18/0,02–3 ist, und in den Co-Kondensationsprodukten der Anteil an Aminoplastbildnern und/oder aromatischen Verbindungen bzw. deren Kondensationsprodukten und/oder Ligninsulfonatharzen und/oder Cellulosederivaten 2 bis 50 Gew.-%, insbesondere 10 bis 40 Gew.-%, bezogen auf das fertige Kondensationsprodukt, beträgt.

7. Verfahren nach einem der vorhergehenden Ansprüche, dadurch gekennzeichnet, dass man als Metallkomplexverbindungen neutrale oder geladene Komplexverbindungen von Metallen der Gruppen III A bis VIII A und/oder der Gruppen I B bis V B einsetzt.

8. Verfahren nach einem der vorhergehenden Ansprüche, dadurch gekennzeichnet, dass man die Kondensationsprodukte und/oder Co-Kondensationsprodukte mit den Metallverbindungen und/oder Metallkomplexverbindungen im Gewichtsverhältnis Kondensationsprodukt und/oder Co-Kondensationsprodukt/Metall der Metallverbindungen und/oder Metallkomplexverbindungen von 100/70, insbesondere 100/0,1 bis 20 umsetzt.

9. Verfahren nach einem der vorhergehenden Ansprüche, dadurch gekennzeichnet, dass man die Umsetzung bei einer Temperatur von 10 bis 250°C, insbesondere von 20 bis 100°C, durchführt.

10. Verfahren nach einem dfer vorhergehenden Ansprüche, dadurch gekennzeichnet, dass man die Umsetzung mit den Metallverbindungen oder Metallkomplexverbindungen in dem bei der Herstellung der Kondensationsprodukte oder Co-Kondensationsprodukte erhaltenen Reaktionsgemisch ohne vorherige Isolierung der Kondensations- oder Co-Kondensationsprodukte durchführt.

11. Verfahren nach einem der vorhergehenden Ansprüche, dadurch gekennzeichnet, dass man das Metall als Salz oder Komplexsalz einer anorganischen oder organischen Säure, als Oxid oder Hydroxid einsetzt, oder, bei zur Bildung einer Metallverbindung oder Metallkomplexverbindung in situ geeigneten pH-Werten, auch in elementarer Form.

12. Verfahren nach einem der vorhergehenden Ansprüche, dadurch gekennzeichnet, dass man die Metallverbindung oder Metallkomplexverbindung in einer Verfahrensstufe der Herstellung der Kondensationsprodukte oder Co-Kondensationsprodukte zugibt.

13. Verfahren nach Anspruch 12, dadurch gekennzeichnet, dass man die Metallverbindung oder Metallkomplexverbindung einem Reaktionspartner oder einem Gemisch aus zwei oder mehreren Reaktionspartnern vor der Zugabe des oder der restlichen Reaktionspartner zugibt.

14. Verwendung der nach einem der Ansprüche 1 bis 13 hergestellten Metallverbindungen als Verdickungsmittel, Retentionsmittel, oberflächenaktives Mittel, Emulgiermittel, Dispergiermittel und/oder Verflüssigungsmittel, insbesondere für Wasser enthaltende Systeme.

**Claims for the contracting states: BE, CH, DE, FR, GB, IT, LI, NL, SE**

1. Metal compounds of acid group-containing condensation products or co-condensation products of ketones, which are symmetrical or asymmetrical ketones in which at least one radical is a non-aromatic radical, and/or cycloalkanones, and aldehydes, obtainable by the reaction of acid group-containing ketone-aldehyde condensation products and/or co-condensation products with mono- or polyvalent metal compounds and/or metal complex compounds of metals of Groups IIIA to VIIIA and/or IB to VB of the Periodic System.

2. Metal compounds according to claim 1, characterised in that one adds the mono- or polyvalent metal compounds and/or metal complex compounds to the finished condensation products or co-condensation products of ketones and aldehydes or into a process step of the production of the condensation products or co-condensation products.

3. Metal compounds according to claim 1 or 2, characterised in that the ketone-aldehyde co-condensation products are co-condensates of ketones and aldehydes with acid group-introducing compounds and with aminoplast formers and/or aromatic compounds and/or their condensation products and/or with lignin sulphonate resins and/or with cellulose derivatives.

4. Metal compounds according to any of claims 1 to 3, characterised in that, as acid groups, they contain carboxyl, phosphono, sulphino, sulpho, sulphamido, sulphoxy, sulphoalkoxy, sulphinalkoxy and/or phosphonooxy groups.

5. Metal compounds according to one of the preceding claims, characterised in that, as ketones, they contain symmetrical or asymmetrical ketones with cyclic or acyclic aliphatic, araliphatic and/or aromatic radicals, whereby at least one radical is non-aromatic.

6. Metal compounds according to one of the preceding claims, characterised in that, in the condensation products, the mole ratio of ketone/aldehyde/acid groups is 1/1–18/0.02–3 and in the co-condensation products the proportion of aminoplast formers and/or of aromatic compounds and/or of their condensation products and/or of lignin sulphonate resins and/or of cellulose derivatives is 2 to 50 wt.%, especially 10 to 40 wt.%, referred to the final condensation product.

7. Metal compounds according to one of the preceding claims, characterised in that, as metal complex compounds, there are used neutral or charged complex compounds of metals of Groups IIIA to VIIIA and/or of Groups IB to VB.

8. Metal compounds according to one of the preceding claims, characterised in that the proportion of metal in the metal compounds is < 70 wt.%, especially 0.1 to 20 wt.%.

9. Process for the preparation of metal compounds according to one of claims 1 to 8, characterised in that one reacts acid group-containing ketone-aldehyde condensation products and/or co-condensation products with mono- to polyvalent metal compounds and/or metal complex compounds of metals of Groups IIIA to VIIIA and/or of Groups IB to VB.

10. Process according to claim 9, characterised in that one reacts the condensation products and/or co-condensation products with the metal compounds and/or metal complex compounds in the weight ratio of condensation product and/or co-condensation product/metal of the metal compounds and/or metal complex compounds of 100/<70, especially of 100/0.1 to 20.

11. Process according to claim 9 or 10, characterised in that, as metal complex compounds, one uses neutral or charged complex compounds of metals of Groups IIIA to VIIIA and/or of Groups IB to VB.

12. Process according to one of claims 9 to 11, characterised in that one carries out the reaction at a temperature of 10 to 250°C., especially of 20 to 100°C.

13. Process according to one of claims 9 to 12, characterised in that one carries out the reaction with the metal compounds or metal complex compounds in the reaction mixture obtained in the production of the condensation products or co-condensation products, without previous isolation of the condensation or co-condensation products.

14. Process according to one of claims 9 to 13, characterised in that one uses the metal as a salt or complex salt of an inorganic or organic acid, as an oxide or hydroxide or also in elementary form in the case of appropriate pH values for the in situ formation of a metal compound or metal complex compound.

15. Process according to one of claims 9 to 14, characterised in that one adds the metal compound or metal complex compound in a process step for the production of the condensation products or co-condensation products.

16. Process according to claim 15, characterised in that one adds the metal compound or metal complex compound to a reaction component or a mixture of two or more reaction components before the addition of the remaining reaction component or components.

17. Use of metal compounds according to one of claims 1 to 8 as thickening agents, retention agents, surface-active agents, emulsifying agents, dispersion agents and/or liquefying agents, especially for water-containing systems.


## Claims for the contracting state: AT

1. Process for the production of metal compounds of acid group-containing condensation products or co-condensation products of ketones, which are symmetrical or asymmetrical ketones in which at least one radical is a non-aromatic radical, and/or cycloalkanones, and aldehydes, characterised in that one reacts acid group-containing ketone-aldehyde condensation products and/or co-condensation products with mono- or polyvalent metal compounds and/or metal complex compounds of metals of Groups IIIA to VIIIA and/or IB to VB of the Periodic System.

2. Process according to claim 1, characterised in that one adds the mono- or polyvalent metal compounds and/or metal complex compounds to the finished condensation products or co-condensation products of ketones and aldehydes or in a process step for the production of the condensation products or co-condensation products.

3. Process according to claim 1 or 2, characterised in that, as ketone-aldehyde co-condensation products, one uses co-condensates of ketones and aldehydes with acid group-introducing compounds and with aminoplast formers and/or aromatic compounds and/or their condensation products and/or with lignin sulphonate resins and/or with cellulose derivatives.

4. Process according to one of claims 1 to 3, characterised in that, the acid groups are carboxyl, phosphono, sulphino, sulpho, sulphamido, sulphoxy, sulphoalkyloxy, sulphinoalkyloxy and/or phosphonooxy groups.

5. Process according to one of the preceding claims, characterised in that the condensation products or co-condensation product contain as ketones symmetrical or asymmetrical ketones with cyclic or acyclic aliphatic, araliphatic and/or aromatic radicals, whereby, however, at least one radical is a non-aromatic radical.

6. Process according to one of the preceding claims, characterised in that one uses condensation products in which the mole ratio of ketones/aldehydes/acid groups is 1/1–18/0.02–3 and in the co-condensation products the proportion of aminoplast formers and/or aromatic compounds or their condensation products and/or lignin sulphonate resins and/or cellulose derivatives 2 to 50 wt.%, especially 10 to 40 wt.%, referred to the final condensation product.

7. Process according to one of the preceding claims, characterised in that, as metal complex compounds, one uses neutral or charged complex compounds of metals of Groups IIIA to VIIIA and/or of Groups IB to VB.

8. Process according to one of the preceding claims, characterised in that one reacts the condensation products and/or co-condensation products with the metal compounds and/or metal complex compounds in the weight ratio of condensation product and/or co-condensation product/metal of the metal compounds and/or metal complex compounds of 100/70, especially 100/0.1 to 20.

9. Process according to one of the preceding claims, characterised in that one carries out the reaction at a temperature of 10 to 250°C, especially of 20 to 100°C.

10. Process according to one of the preceding claims, characterised in that one carries out the reaction with the metal compounds or metal complex compounds in the reaction mixture obtained in the preparation of the condensation products or co-condensation products, without previous isolation of the condensation or co-condensation products.

11. Process according to one of the preceding claims, characterised in that one reacts the metal as salt or complex salt of an inorganic or organic acid, as oxide or hydroxide, also in elementary form in the case of appropriate pH values for the in situ formation of a metal compound or metal complex compound.

12. Process according to one of the preceding claims, characterised in that one adds the metal compound or metal complex compound in a process step for the production of the condensation products or co-condensation products.

13. Process according to claim 12, characterised in that one adds the metal compound or metal complex compound to a reaction component or to a mixture of two or more reaction components before the addition of the remaining reaction component or components.

14. Use of the metal compounds produced according to one of claims 1 to 13 as thickening agents, retention agents, surface-active agents, emulsifying agents, dispersion agents and/or liquefying agents, especially for water-containing systems.

**Revendications pour les états contractants: BE, CH, DE, FR, GB, IT, LI, NL, SE**

1. Composés métalliques de produits de condensation ou de produits de co-condensation contenant des groupes acides de cétones qui sont des cétones symétriques ou asymétriques, dans lesquelles au moins un radical est un radical non aromatique, et/ou des cycloalcanones et d'aldéhydes, pouvant être obtenus par réaction de produits de condensation et/ou de produits de co-condensation cétone-aldéhyde contenant des groupes acides avec des composés métalliques mono- ou polyvalents et/ou des composés complexes métalliques de métaux des groupes III A à VIII A et/ou I B à V B de la Classification Périodique.

2. Composés métalliques suivant la revendication 1, caractérisés en ce qu'on ajoute les composés métalliques mono- ou polyvalents et/ou les composés complexes métalliques aux produits de condensation ou aux produits de co-condensation finis de cétones et d'aldéhydes dans un des stades de la préparation des produits de condensation ou des produits de co-condensation.

3. Composés métalliques suivant les revendications 1 ou 2, caractérisés en ce que les produits de co-condensation cétone-aldéhyde sont des co-condensats de cétones et d'aldéhydes avec des composés introduisant des groupes acides et avec des formateurs d'aminoplastes et/ou des composés aromatiques et/ou leurs produits de condensation et/ou avec des résines de lignosulfonates et/ou avec des dérivés de la cellulose.

4. Composés métalliques suivant l'une des revendications 1 à 3, caractérisés en ce qu'ils contiennent comme groupes acides des groupes carboxy, phosphono, sulfino, sulfo, sulfamido, sulfoxy, sulfalkyloxy, sulfinalkyloxy et/ou phosphonoxy.

5. Composés métalliques suivant l'une des revendications précédentes, caractérisés en ce qu'ils contiennent comme cétones, des cétones symétriques ou asymétriques ayant des radicaux cycliques ou acycliques aliphatiques, araliphatiques et/ou aromatiques, au moins unradical étant cependant un radical non aromatique.

6. Composés métalliques suivant l'une des revendications précédentes, caractérisés en ce que dans les produits de condensation, le rapport molaire cétone/aldéhyde/groupes acides est de 1/1–18/0,02–3, et en ce que dans les produits de co-condensation, la proportion de formateurs d'aminoplastes et/ou de composés aromatiques ou de leurs produits de condensation et/ou de résines de lignosulfonates et/ou de dérivés de la cellulose est de 2 à 50% en poids, en partiuclier de 10 à 40% en poids par rapport au produit de condensation terminé.

7. Procédé suivant l'une des revendications précédentes, caractérisé en ce qu'on utilise comme composés complexes métalliques des composés complexes neutres ou chargés de métaux des groupes III A à VIII A et/ou des groupes I B à V B.

8. Composés métalliques suivant l'une des revendications précédentes, caractérisés en ce que la proportion de métal dans le composé métallique est inférieure à 70% en poids, en particulier de 0,1 à 20% en poids.

9. Procédé de préparation de composés métalliques suivant l'une des revendications 1 à 8, caractérisé en ce qu'on fait réagir des produits de condensation et/ou des produits de co-condensation cétone/aldéhyde contenant des groupes acides avec des composés métalliques mono à polyvalents et/ou des composés complexes métalliques de métaux des groupes III A à VIII A et/ou des groupes I B à V B.

10. Procédé suivant la revendication 9, caractérisé en ce qu'on fait réagir les produits de condensation et/ou les produits de co-condensation avec les composés métalliques et/ou des composés complexes métalliques dans le rapport pondéral produit de condensation et/ou produit de co-condensation/métal des composés métalliques et/ou des composés complexes métalliques de 100/70, en particulier de 100/0,1 à 20.

11. Procédé suivant les revendications 9 ou 10, caractérisé en ce qu'on utilise comme composés complexes métalliques des composés complexes neutres ou chargés de métaux des groupes III A à VIII A et/ou des groups I B à V B.

12. Procédé suivant l'une des revendications 9 à 11, caractérisé en ce qu'on effectue la réaction à une température de 10 à 250°C, en particulier de 20 à 100°C.

13. Procédé suivant l'une des revendications 9 à 12, caractérisé en ce qu'on effectue la réaction avec les composés métalliques ou les composés complexes métalliques dans le mélange réactionnel obtenu lors de la préparation des produits de condensation ou des produits de co-condensation sans isolement préalable des produits de condensation ou de co-condensation.

14. Procédé suivant l'une des revendications 9 à 13, caractérisé en ce qu'on utilise le métal sous forme de sel ou de sel complexe d'un acide minéral ou organique, sous forme d'oxyde ou d'hydroxyde, ou encore, à des pH appropriés à la formation in situ d'un composé métallique ou d'un composé complexe métallique, sous forme élémentaire.

15. Procédé suivant l'une des revendications 9 à 14, caractérisé en ce qu'on ajoute le composé métallique ou le composé complexe métallique dans un stade du procédé de préparation des produits de condensation ou de co-condensation.

16. Procédé suivant la revendication 15, caractérisé en ce qu'on ajoute le composé métallique ou le composé complexe métallique à un partenaire réactionnel ou à un mélange de deux partenaires réactionnels ou davantage avant l'addition du partenaire réactionnel restant.

17. Utilisation des composés métalliques suivant l'une des revendications 1 à 8 comme épaississants, agents de rétention, agents tensioactifs, émulsionnants, dispersants et/ou fluidifiants, en particulier pour des systèmes contenant de l'eau.


Revendications pour l'état contractant: AT

1. Procédé de préparation de composés métalliques de produits de condensation ou de produits de co-condensation contenant des groupes acides de cétones qui sont des cétones symétriques ou asymétriques dans lesquelles au moins un radical est un radical non aromatique, et/ou des cycloalcanones, et d'aldéhydes, caractérisé en ce qu'on fait réagir des produits de condensation et/ou des produits de co-condensation cétone-aldéhyde contenant des groupes acides avec des composés métalliques mono- ou polyvalents et/ou des composés complexes métalliques de métaux des groupes III A à VIII A et/ou I B à V B de la Classification Périodique.

2. Procédé suivant la revendication 1, caractérisé en ce qu'on ajoute les composés métalliques mono- ou polyvalents et/ou les composés complexes métalliques aux produits de condensation ou aux produits de co-condensation terminés de cétones et d'aldéhydes ou dans un stade de la préparation des produits de condensation ou des produits de co-condensation.

3. Procédé suivant les revendications 1 ou 2, caractérisé en ce qu'on utilise comme produits de condensation cétone-aldéhyde des co-condensats de cétones et d'aldéhydes avec des composés introduisant des groupes acides, et avec des formateurs d'aminoplastes et/ou des composés aromatiques et/ou leurs produits de condensation et/ou avec des résines de lignosulfonates et/ou avec des dérivés de la cellulose.

4. Procédé suivant l'une des revendications 1 à 3, caractérisé en ce que les groupes acides sont des groupes carboxy, phosphono, sulfino, sulfo, sulfamido, sulfoxy, sulfakyloxy, sulfinalkyloxy et/ou phosphonoxy.

5. Procédé suivant l'une des revendications précédentes, caractérisé en ce que les produits de condensation ou les produits de co-condensation sont contenus sous forme de cétones symétriques ou asymétriques avec des radicaux cycliques ou acycliques, aliphatiques, araliphatiques et/ou aromatiques, au moins un radical étant cependant un radical non aromatique.

6. Procédé suivant l'une des revendications précédentes, caractérisé en ce qu'on utilise des produits de condensation dans lesquels le rapport molaire cétone/aldéhyde/groupes acides est de 1/1–18/0,02–3, et en ce que dans les produits de co-condensation, la proportion des formateurs d'aminoplastes et/ou des composés aromatiques ou de leurs produits de condensation et/ou de résines de lignosulfonates et/ou de dérivés de la cellulose est de 2 à 50% en poids, en particulier de 10 à 40% en poids, par rapport au produit de condensation terminé.

7. Procédé suivant l'une des revendications précédentes, caractérisé en ce qu'on utilise comme composés complexes métalliques des composés complexes neutres ou chargés de métaux des groupes III A à VIII A et/ou des groupes I B à V B.

8. Procédé suivant l'une des revendications précédentes, caractérisé en ce qu'on fait réagir les produits de condensation et/ou les produits de co-condensation avec les composés métalliques et/ou les composés complexes métalliques dans le rapport pondéral produit de condensation et/ou produit de co-condensation/métal des composés métalliques et/ou des composés complexes métalliques de 100/70, en particulier de 100/0,1 à 20.

9. Procédé suivant l'une des revendications précédentes, caractérisé en ce qu'on effectue la réaction à une température de 10 à 250°C, en particulier de 20 à 100°C.

10. Procédé suivant l'une des revendications précédentes, caractérisé en ce qu'on effectue la réaction avec les composés métalliques ou les composés complexes métalliques dans le mélange réactionnel obtenu lors de la préparation des produits de condensation ou des produits de co-condensation, sans isolement préalable des produits de condensation ou de co-condensation.

11. Procédé suivant l'une des revendications précédentes, caractérisé en ce qu'on utilise le métal sous forme de sel ou de sel complexe d'un acide minéral ou organique, sous forme d'oxyde ou d'hydroxyde, ou encore, à des pH appropriés à la formation in situ d'un composé métallique ou d'un composé complexe métallique, sous forme élémentaire.

12. Procédé suivant l'une des revendications précédentes, caractérisé en ce qu'on ajoute le composé métallique ou le composé complexe métallique dans un stade du procédé de préparation des produits de condensation ou des produits de co-condensation.

13. Procédé suivant la revendication 12, caractérisé en ce qu'on ajoute le composé métallique ou le composé complexe métallique à un partenaire réactionnel ou à un mélange de deux partenaires réactionnels ou davantage avant l'addition du ou des partenaire(s) réactionnel(s) restant(s).

14. Utilisation des composés métalliques préparés suivant l'une des revendications 1 à 13 comme épaississants, agents de rétention, agents tensioactifs émulsionnants, dispersants et/ou fluidifiants, en particulier pour des systèmes contenant de l'eau.